# EUROPEAN PATENT APPLICATION

(11) **EP 4 086 757 A1**
(43) Date of publication of application: **09.11.2022**
(21) Application number: 21743687.2
(22) Date of filing: 05.01.2021
(51) Int. Cl.: G06F 8/65

(54) **SOFTWARE UPGRADING METHOD AND DEVICE**

(30) Priority: 23.01.2020 CN 202010077050
(71) Applicant: Huawei Technologies Co., Ltd., Shenzhen, Guangdong 518129, (CN)
(72) Inventor: REVADIGAR, Girish Shivalingappa, Shenzhen, Guangdong 518129 (CN); WEI, Zhuo, Shenzhen, Guangdong 518129 (CN)
(74) Representative: Epping - Hermann - Fischer
(86) International application number: PCT/CN2021/070365
(87) International publication number: WO 2021/147668

(57) **Abstract**

This application provides a software upgrade method and a device, which may be used for vehicle-mounted device upgrade in the smart vehicle field. In the foregoing solution, an upgrade server may combine a plurality of intermediate patch files that meet an upgrade requirement of target application software of a terminal device. In this way, the terminal device may download and install a combined patch file only once, to upgrade the target application software from a current version number to a target version number. It is clear that the method can obviously shorten a time consumed by the terminal device for software upgrade, and can improve software upgrade efficiency of the terminal device.

## Description

### CROSS-REFERENCE TO RELATED APPLICATIONS

This application claims priority to Chinese Patent Application No. 202010077050.5, filed with the Chinese Patent Office on January 23, 2020 and entitled "SOFTWARE UPGRADE METHOD AND DEVICE", which is incorporated herein by reference in its entirety.

### TECHNICAL FIELD

This application relates to the field of communications technologies, and in particular, to a software upgrade method and a device.

### BACKGROUND

With development of communications technologies and increasing service requirements of users, services that can be implemented by a terminal device become increasingly diversified. Examples of some terminal devices are a mobile phone, a tablet computer, a smart home device, a wearable device, an internet of things (Internet of Things, IoT) device, an internet of vehicles device, and the like.

Functions and operations implemented by these terminal devices are implemented by application software loaded into the terminal devices. However, in a software development stage, because a software designer does not have comprehensive consideration or a program function is incomplete, after the software is released, a software developer needs to frequently upgrade the application software. Usually, the upgrade is released in a form of a patch file. The patch file includes code for partially modifying the application software.

After developing the patch file, the software developer submits the patch file to an over the air (Over the air, OTA) server. The OTA server determines a current version of the application software on the terminal device by interacting with the terminal device, and then the OTA server adds an update patch file for the current version of the application software to an OTA data package (compressed package) and sends the OTA data package to the terminal device side. Finally, the terminal device may upgrade the local application software based on the patch file downloaded from the OTA server.

However, due to a space limitation of the OTAdata package, when there are a plurality of patch files in the OTAserver that are later than the current version on the terminal device, the terminal device usually needs a plurality of OTA download processes to download these patch files from the OTA server. In addition, after downloading these patch files, the terminal device needs to sequentially install the patch files based on a version sequence of the patch files. In conclusion, a relatively long time consumed in a conventional OTA up grade process affects working efficiency of the terminal device.

### SUMMARY

This application provides a software upgrade method and device, to resolve a problem that a conventional software upgrade process is time-consuming.

According to a first aspect, an embodiment of this application provides a software upgrade method, where the method is applied to a software development device, and the method includes the following steps:
The software development device generates a patch file of target application software and a corresponding version number of the patch file, where the patch file includes a first code segment, the first code segment includes a first code segment identifier and first code content, encrypting, by the software development device, the patch file includes: The software development device encrypts the first code content based on a first security key; and the software development device encrypts, based on a first operation key, the first code segment identifier and first code content that is encrypted by using the first security key, and the first operation key is different from the first security key; and the software development device sends an encrypted patch file and an encrypted version number corresponding to the patch file to an upgrade server.

According to the foregoing method, in a process of encrypting each patch file, the software development device uses different keys to separately encrypt the first code segment identifier and the first code content. In this way, in a process of combining patch files, the upgrade server may decrypt only the encrypted first code segment identifier, but cannot decrypt the encrypted first code content. Therefore, the method can ensure security of code content in the patch file. In a possible design, before that the software development device encrypts, based on a first operation key, the first code segment identifier and first code content that is encrypted by using the first security key, the method further includes: The software development device obtains an identifier offset value of the target application software; and the software development device offsets the first code segment identifier based on the identifier offset value. According to the foregoing design, the software development device may perform identifier offset processing on the first code segment identifier of the patch file, so as to ensure security of the first code segment identifier in the patch file.

In a possible design, the patch file further includes a patch header, where the patch header is used to indicate the target application software. That the software development device performs encryption processing on the patch file further includes: The software development device encrypts the patch header based on the first security key.

According to the foregoing design, the software development device may encrypt the patch header of the patch file. This ensures security of the patch header.

In a possible design, the patch file includes at least one first code segment, the first code segment is a line of first code, and the first code segment identifier is a line number of the first code.

According to a second aspect, an embodiment of this application provides a software upgrade method, where the method is applied to an upgrade server, and the method includes the following steps:
An upgrade server stores an encrypted patch file of target application software and a version number corresponding to the patch file, where the encrypted patch file includes an encrypted first code segment, the encrypted first code segment is obtained by encrypting, by using a first operation key, a first code segment identifier and first code content that is encrypted by using a first security key, and the first operation key is different from the first security key; the upgrade server receives a patch download request for the target application software from a terminal device; the upgrade server determines, based on the patch download request, a current version number of the target application software that is already installed on the terminal device and a target version number of the target application software that is to be upgraded by the terminal device; the upgrade server determines, based on the current version number and the target version number, an intermediate patch file from the locally stored encrypted patch file of the target application software, where the intermediate patch file is an encrypted patch file whose version number is greater than the current version number and less than or equal to the target version number; when there are a plurality of intermediate patch files, the upgrade server decrypts each intermediate patch file based on a second operation key, where the decryption includes decrypting an encrypted first code segment included in each intermediate patch file, to obtain a first code segment identifier of the first code segment of each intermediate patch file and first code content that is encrypted by using the first security key; the upgrade server combines the plurality of decrypted intermediate patch files based on version numbers corresponding to the plurality of intermediate patch files and the first code segment identifier included in the first code segment in each decrypted intermediate patch file, to obtain a combined patch file of the target application software, where the combined patch file includes an updated first code segment, and the updated first code segment includes the first code content encrypted by using the first security key and an updated first code segment identifier; the upgrade server encrypts the combined patch file based on the first operation key, where the updated first code segment in the combined patch file is encrypted based on the first operation key; and the upgrade server sends the encrypted combined patch file to the terminal device.

According to the method, the upgrade server may combine the plurality of intermediate patch files that meet an upgrade requirement of the target application software of the terminal device. In this way, the terminal device may download and install the combined patch file only once, so that the target application software can be upgraded from the current version number to the target version number. It is clear that the method can shorten a time consumed by the terminal device to perform software upgrade, and can improve software upgrade efficiency of the terminal device. In a possible design, that the upgrade server combines the plurality of decrypted intermediate patch files based on version numbers corresponding to the plurality of intermediate patch files and the first code segment identifier included in the first code segment in each decrypted intermediate patch file, to obtain a combined patch file of the target application software includes:
the upgrade server sorts the plurality of decrypted intermediate patch files based on an order of the stored version numbers corresponding to the plurality of intermediate patch files, to obtain a file sequence, where a decrypted intermediate patch file with the earliest version number is located at a first place of the file sequence, and a decrypted intermediate patch file with the latest version number is located at a last place of the file sequence; and the upgrade server sequentially combines, based on the first code segment identifier included in the first code segment in each decrypted intermediate patch file and an order of the file sequence, all the decrypted intermediate patch files, to obtain the combined patch file.

This design can ensure accuracy of the combined patch file generated by the upgrade server, that is, an effect of installing the combined patch file by the terminal device is the same as an effect of sequentially installing the plurality of intermediate patch files based on an order of version numbers.

In a possible design, the encrypted patch file further includes an encrypted patch header, and the encrypted patch header is encrypted by using the first security key; and the combined patch file further includes the encrypted patch header.

In a possible design, That the upgrade server determines a current version number of the target application software that is already installed on the terminal device and a target version number of the target application software that is to be upgraded by the terminal device includes:
The upgrade server obtains, from the patch download request, the current version number of the target application software that is already installed on the terminal device and the target version number of the target application software that is to be upgraded by the terminal device.

According to this design, the terminal device may send the upgrade requirement of the terminal device for the target application software by using the patch download request.

In a possible design, the encrypted patch file includes at least one encrypted first code segment, the encrypted first code segment is a line of encrypted first code, and the first code segment identifier is a line number of the first code; and the combined patch file includes at least one updated first code segment.

According to a third aspect, an embodiment of this application provides a software upgrade method, where the method is applied to a terminal device, and the method includes the following steps:
The terminal device sends a patch download request for target application software to the upgrade server; the terminal device receives an encrypted combined patch file of the target application software from the upgrade server, where the encrypted combined patch file is generated by the upgrade server by combining a plurality of intermediate patch files of the target application software, the encrypted combined patch file includes an encrypted first code segment, the encrypted first code segment is obtained by encrypting a first code segment by using a first operation key, the first code segment includes a first code segment identifier and first code content that is encrypted by using a first security key, and the first operation key is different from the first security key, where the terminal device decrypts the encrypted combined patch file to obtain a combined patch file includes: The terminal device decrypts, based on a second operation key, the encrypted first code segment to obtain the first code segment; and the terminal device decrypts, based on a second security key, the first code content that is included in the first code segment and that is encrypted by using the first security key, to obtain the first code content; and the terminal device upgrades the installed target application software based on the first code segment identifier and the first code content that are included in the first code segment in the combined patch file.

According to the method, the upgrade server may combine the plurality of intermediate patch files that meet an upgrade requirement of the target application software of the terminal device. In this way, the terminal device may download and install the combined patch file only once, so that the target application software can be upgraded from the current version number to the target version number. It is clear that the method can shorten a time consumed by the terminal device to perform software upgrade, and can improve software upgrade efficiency of the terminal device. In a possible design, the encrypted combined patch file further includes an encrypted patch header, and the encrypted patch header is encrypted by using the first security key. That the terminal device decrypts the encrypted combined patch file further includes: The terminal device decrypts the encrypted patch header of the encrypted combined patch file based on the second security key, to obtain a patch header.

In a possible design, after that the terminal device decrypts the encrypted combined patch file, and before that the terminal device upgrades the installed target application software based on the first code segment identifier and the first code content that are included in the first code segment in the combined patch file, the method further includes: The terminal device obtains an identifier offset value of the target application software; and the terminal device offsets, based on the identifier offset value, the first code segment identifier included in the first code segment in the combined patch file.

In this design, to ensure security of the first code segment identifier in the patch file, after generating the patch file, the software development device performs offset processing on the first code segment identifier in the patch file. Therefore, herein, to ensure that the terminal device can successfully install the combined patch file, the terminal device also needs to perform offset processing on the first code segment identifier in the combined patch file, to restore an original value of the first code segment identifier. It should be noted that the identifier offset processing performed by the software development device and the terminal device is a reciprocal operation. For example, if the software development device adds the identifier offset value to a value of the first code segment identifier in the patch file, the software development device subtracts the identifier offset value from the value of the first code segment identifier in the combined patch file.

In a possible design, the patch download request includes a current version number of the target application software that is already installed on the terminal device, and a target version number of the target application software that is to be upgraded by the terminal device.

According to this design, the terminal device may send the upgrade requirement of the terminal device for the target application software by using the patch download request.

In a possible design, the encrypted combined patch file includes at least one encrypted first code segment, the encrypted first code segment is a line of encrypted first code, and the first code segment identifier is a line number of the first code.

According to a fourth aspect, an embodiment of this application provides a software upgrade method, where the method is applied to a software development device, and the method includes the following steps:
The software development device generates a patch file of target application software and a corresponding version number of the patch file. The patch file includes a first code segment, and the first code segment includes a first code segment identifier and first code content. That the software development device encrypts the patch file includes: The software development device encrypts the first code content based on a first security key, and the software development device encrypts the first code segment identifier based on a first operation key. The first operation key is different from the first security key. The software development device sends an encrypted patch file and a version number corresponding to the patch file to an upgrade server.

According to the foregoing method, in a process of encrypting each patch file, the software development device uses different keys to separately encrypt the first code segment identifier and the first code content. In this way, in a process of combining patch files, the upgrade server may decrypt only the encrypted first code segment identifier, but cannot decrypt the encrypted first code content. Therefore, the method can ensure security of code content in the patch file. In a possible design, before that the software development device encrypts the first code segment identifier based on a first operation key, the method further includes: The software development device obtains an identifier offset value of the target application software; and the software development device offsets the first code segment identifier based on the identifier offset value.

According to the foregoing design, the software development device may perform identifier offset processing on the first code segment identifier of the patch file, so as to ensure security of the first code segment identifier in the patch file.

In a possible design, the patch file further includes a patch header, where the patch header is used to indicate the target application software. That the software development device performs encryption processing on the patch file further includes: The software development device encrypts the patch header based on the first security key.

According to the foregoing design, the software development device may encrypt the patch header of the patch file. This ensures security of the patch header.

In a possible design, the patch file includes at least one first code segment, the first code segment is a line of first code, and the first code segment identifier is a line number of the first code.

According to a fifth aspect, an embodiment of this application provides a software upgrade method, where the method is applied to an upgrade server, and the method includes the following steps:
The upgrade server stores an encrypted patch file of target application software and a version number corresponding to the patch file, where the encrypted patch file includes a first code segment, and the first code segment includes an encrypted first code segment identifier and encrypted first code content, the encrypted first code segment identifier is obtained by encrypting a first code segment identifier by using a first operation key, the encrypted first code content is obtained by encrypting first code content by using a first security key, and the first operation key is different from the first security key; the upgrade server receives a patch download request for the target application software from a terminal device; the upgrade server determines, based on the patch download request, a current version number of the target application software that is already installed on the terminal device and a target version number of the target application software that is to be upgraded by the terminal device; the upgrade server determines, based on the current version number and the target version number, an intermediate patch file from the locally stored encrypted patch file of the target application software, where the intermediate patch file is an encrypted patch file whose version number is greater than the current version number and less than or equal to the target version number; when there are a plurality of intermediate patch files, the upgrade server decrypts each intermediate patch file based on a second operation key, where the decryption includes decrypting an encrypted first code segment identifier included in a first code segment of each intermediate patch file, to obtain a first code segment identifier included in the first code segment of each intermediate patch file; the upgrade server combines the plurality of decrypted intermediate patch files based on version numbers corresponding to the plurality of intermediate patch files and the first code segment identifier included in the first code segment in each decrypted intermediate patch file, to obtain a combined patch file of the target application software, where the combined patch file includes an updated first code segment, and the updated first code segment includes the first code content encrypted by using the first security key and an updated first code segment identifier; the upgrade server encrypts the combined patch file based on the first operation key, where the updated first code segment identifier in the combined patch file is encrypted based on the first operation key; and the upgrade server sends the encrypted combined patch file to the terminal device.

According to the method, the upgrade server may combine the plurality of intermediate patch files that meet an upgrade requirement of the target application software of the terminal device. In this way, the terminal device may download and install the combined patch file only once, so that the target application software can be upgraded from the current version number to the target version number. It is clear that the method can shorten a time consumed by the terminal device to perform software upgrade, and can improve software upgrade efficiency of the terminal device. In a possible design, that the upgrade server combines the plurality of decrypted intermediate patch files based on version numbers corresponding to the plurality of intermediate patch files and the first code segment identifier included in the first code segment in each decrypted intermediate patch file, to obtain a combined patch file of the target application software includes:
the upgrade server sorts the plurality of decrypted intermediate patch files based on an order of the stored version numbers corresponding to the plurality of intermediate patch files, to obtain a file sequence, where a decrypted intermediate patch file with the earliest version number is located at a first place of the file sequence, and a decrypted intermediate patch file with the latest version number is located at a last place of the file sequence; and the upgrade server sequentially combines, based on the first code segment identifier included in the first code segment in each decrypted intermediate patch file and an order of the file sequence, all the decrypted intermediate patch files, to obtain the combined patch file.

This design can ensure accuracy of the combined patch file generated by the upgrade server, that is, an effect of installing the combined patch file by the terminal device is the same as an effect of sequentially installing the plurality of intermediate patch files based on an order of version numbers.

In a possible design, the encrypted patch file further includes an encrypted patch header, and the encrypted patch header is encrypted by using the first security key; and the combined patch file further includes the encrypted patch header.

In a possible design, That the upgrade server determines a current version number of the target application software that is already installed on the terminal device and a target version number of the target application software that is to be upgraded by the terminal device includes:
The upgrade server obtains, from the patch download request, the current version number of the target application software that is already installed on the terminal device and the target version number of the target application software that is to be upgraded by the terminal device.

According to this design, the terminal device may send the upgrade requirement of the terminal device for the target application software by using the patch download request.

In a possible design, the encrypted patch file includes at least one encrypted first code segment, the encrypted first code segment is a line of encrypted first code, and the first code segment identifier is a line number of the first code; and the combined patch file includes at least one updated first code segment.

According to a sixth aspect, an embodiment of this application provides a software upgrade method, where the method is applied to a terminal device, and the method includes the following steps:
The terminal device sends a patch download request for target application software to the upgrade server; the terminal device receives an encrypted combined patch file of the target application software from the upgrade server, where the encrypted combined patch file is generated by the upgrade server by combining a plurality of target patch files of the target application software, the encrypted combined patch file includes a first code segment, the first code segment includes an encrypted first code segment identifier and encrypted first code content, the encrypted first code segment identifier is obtained by encrypting the first code segment by using a first operation key, the encrypted first code content is obtained by encrypting first code content by using a first security key, and the first operation key is different from the first security key, where that the terminal device decrypts the encrypted combined patch file to obtain a combined patch file includes: The terminal device decrypts the encrypted first code segment identifier based on a second operation key, to obtain a first code segment identifier; and the terminal device decrypts the encrypted first code content based on a second security key, to obtain the first code content; and the terminal device upgrades the installed target application software based on the first code segment identifier and the first code content that are included in the first code segment in the combined patch file.

According to the method, the upgrade server may combine the plurality of intermediate patch files that meet an upgrade requirement of the target application software of the terminal device. In this way, the terminal device may download and install the combined patch file only once, so that the target application software can be upgraded from the current version number to the target version number. It is clear that the method can shorten a time consumed by the terminal device to perform software upgrade, and can improve software upgrade efficiency of the terminal device. In a possible design, the encrypted combined patch file further includes an encrypted patch header, and the encrypted patch header is encrypted by using the first security key. That the terminal device decrypts the encrypted combined patch file further includes: The terminal device decrypts the encrypted patch header of the encrypted combined patch file based on the second security key, to obtain a patch header.

In a possible design, after that the terminal device decrypts the encrypted combined patch file, and before that the terminal device upgrades the installed target application software based on the first code segment identifier and the first code content that are included in the first code segment in the combined patch file, the method further includes: The terminal device obtains an identifier offset value of the target application software; and the terminal device offsets, based on the identifier offset value, the first code segment identifier included in the first code segment in the combined patch file.

In this design, to ensure security of the first code segment identifier in the patch file, after generating the patch file, the software development device performs offset processing on the first code segment identifier in the patch file. Therefore, herein, to ensure that the terminal device can successfully install the combined patch file, the terminal device also needs to perform offset processing on the first code segment identifier in the combined patch file, to restore an original value of the first code segment identifier. It should be noted that the identifier offset processing performed by the software development device and the terminal device is a reciprocal operation. For example, if the software development device adds the identifier offset value to a value of the first code segment identifier in the patch file, the software development device subtracts the identifier offset value from the value of the first code segment identifier in the combined patch file.

In a possible design, the patch download request includes a current version number of the target application software that is already installed on the terminal device, and a target version number of the target application software that is to be upgraded by the terminal device.

According to this design, the terminal device may send the upgrade requirement of the terminal device for the target application software by using the patch download request.

In a possible design, the encrypted combined patch file includes at least one first code segment, the first code segment is a line of first code, and the first code segment identifier is a line number of the first code.

According to a seventh aspect, an embodiment of this application provides a software development device, including units configured to perform the steps in the first aspect or the fourth aspect.

According to an eighth aspect, an embodiment of this application provides an upgrade server, including units configured to perform the steps in the second aspect or the fifth aspect.

According to a ninth aspect, an embodiment of this application provides a terminal device, including units configured to perform the steps in the third aspect or the sixth aspect.

According to a tenth aspect, an embodiment of this application provides a software development device, including at least one processing element and at least one storage element. The at least one storage element is configured to store a program and data, and the at least one processing element is configured to perform the method provided in the first aspect or the fourth aspect of this application.

According to an eleventh aspect, an embodiment of this application provides an upgrade server, including at least one processing element and at least one storage element, where the at least one storage element is configured to store a program and data, and the at least one processing element is configured to perform the method provided in the second aspect or the fifth aspect of this application.

According to a twelfth aspect, an embodiment of this application provides a terminal device, including at least one processing element and at least one storage element. The at least one storage element is configured to store a program and data, and the at least one processing element is configured to perform the method provided in the third aspect or sixth aspect of this application.

According to a thirteenth aspect, an embodiment of this application provides a software upgrade system, including a software development device, an upgrade server, and a terminal device, where the software development device has a function of performing the method provided in the first aspect of this application, the upgrade server has a function of performing the method provided in the second aspect of this application, and the terminal device has a function of performing the method provided in the third aspect of this application; or the software development device has a function of performing the method provided in the fourth aspect of this application, the upgrade server has a function of performing the method provided in the fifth aspect of this application, and the terminal device has a function of performing the method provided in the sixth aspect of this application.

According to a fourteenth aspect, an embodiment of this application further provides a computer program When the computer program is run on a computer, the computer is enabled to perform the method provided in any one of the first to sixth aspects.

According to a fifteenth aspect, an embodiment of this application further provides a computer-readable storage medium The computer-readable storage medium stores a computer program. When the computer program is executed by a computer, the computer is enabled to perform the method provided in any one of the first to sixth aspects. According to a sixteenth aspect, an embodiment of this application further provides a chip. The chip is configured to read a computer program stored in a memory, to perform the method provided in any one of the first to sixth aspects. According to a seventeenth aspect, an embodiment of this application further provides a chip system The chip system includes a processor, configured to support a computer apparatus in implementing the method provided in any one of the first to sixth aspects. In a possible design, the chip system further includes a memory, and the memory is configured to store a program and data that are necessary for the computer apparatus. The chip system may include a chip, or may include a chip and another discrete component.

### BRIEF DESCRIPTION OF DRAWINGS

FIG. 1 is a diagram of an architecture of a software upgrade system according to an embodiment of this application;
FIG. 2 is a flowchart of a software upgrade method according to an embodiment of this application;
FIG. 3 is an example diagram of generating a patch file according to an embodiment of this application;
FIG. 4A is a first example diagram of encrypting a patch file according to an embodiment of this application;
FIG. 4B is a second example diagram of encrypting a patch file according to an embodiment of this application;
FIG. 4C is a third example diagram of encrypting a patch file according to an embodiment of this application;
FIG. 4D is a fourth example diagram of encrypting a patch file according to an embodiment of this application;
FIG. 5A(1) and FIG. 5A(2) are schematic diagrams of a patch file combination method according to an embodiment of this application;
FIG. 5B(1) and FIG. 5B(2) are schematic diagrams of another patch file combination method according to an embodiment of this application;
FIG. 6A is a schematic diagram of a process of encrypting a line number of a combined patch file according to an embodiment of this application;
FIG. 6B is a schematic diagram of another process of encrypting a line number of a combined patch file according to an embodiment of this application;
FIG. 7A is a schematic diagram of a first process of decrypting a combined patch file according to an embodiment of this application;
FIG. 7B is a schematic diagram of a second process of decrypting a combined patch file according to an embodiment of this application;
FIG. 7C is a schematic diagram of a third process of decrypting a combined patch file according to an embodiment of this application;
FIG. 7D is a schematic diagram of a fourth process of decrypting a combined patch file according to an embodiment of this application;
FIG. 7E is a schematic diagram of a fifth process of decrypting a combined patch file according to an embodiment of this application;
FIG. 7F is a schematic diagram of a sixth process of decrypting a combined patch file according to an embodiment of this application;
FIG. 8 is a flowchart of communication between a software development device and an upgrade server according to an embodiment of this application;
FIG. 9 is a flowchart of communication between an upgrade server and a terminal device according to an embodiment of this application;
FIG. 10A and FIG. 10B are another flowchart of communication between an upgrade server and a terminal device according to an embodiment of this application;
FIG. 11 is a diagram of a structure of a communications apparatus according to an embodiment of this application; and
FIG. 12 is a diagram of a structure of a communications device according to an embodiment of this application.

### DESCRIPTION OF EMBODIMENTS

This application provides a software upgrade method and a device, to shorten a time consumed for upgrading software of a terminal device. The method and the device are based on a same technical concept. Because a problem-resolving principle of the method is similar to a problem-resolving principle of the device, mutual reference may be made to implementations of the method and the device, and no repeated description is provided.

In the solution provided in this embodiment of this application, after encrypting a patch file generated each time, a software development device sends an encrypted patch file and a corresponding version number to an upgrade server for storage. The upgrade server may determine, based on an upgrade requirement of a terminal device for target application software, a plurality of intermediate patch files from locally stored patch files of the target application software. Then, the upgrade server decrypts an encrypted first code segment identifier in each intermediate patch file, combines the plurality of intermediate patch files based on the version number and the first code segment identifier in each intermediate patch file to obtain a combined patch file, encrypts the combined patch file, and sends the encrypted combined patch file to the terminal device, so that the terminal device can perform software upgrade on the target application software based on the combined patch file.

In the foregoing solution, the upgrade server may combine the plurality of intermediate patch files that meet an upgrade requirement of the target application software of the terminal device. In this way, the terminal device may download and install the combined patch file only once, so that the target application software can be upgraded from the current version number to the target version number. It is clear that the method can shorten a time consumed by the terminal device to perform software upgrade, and can improve software upgrade efficiency of the terminal device. In addition, in a process of encrypting each patch file, the software development device uses different keys to separately encrypt the first code segment identifier and the first code content. In this way, in a process of combining patch files, the upgrade server may decrypt only the encrypted first code segment identifier, but cannot decrypt the encrypted first code content. Therefore, the method can ensure security of code content in the patch file.

In the following, some terms in this application are described, so as to help persons skilled in the art have a better understanding.
(1) A terminal device, a device that can provide, by installing application software, a user with various service functions such as corresponding voice, video, photographing, and data connectivity. The terminal device may also be referred to as user equipment (user equipment, UE), a mobile station (mobile station, MS), a mobile terminal (mobile terminal, MT), or the like.

For example, the terminal device may be a handheld device, a vehicle-mounted device, or the like that has a wireless connection function. Currently, some terminal devices are, for example, a mobile phone (mobile phone), a tablet computer, a notebook computer, a palmtop computer, a mobile internet device (mobile internet device, MID), a point of sale (point of sale, POS), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), various smart meters (a smart water meter, a smart meter, and a smart gas meter), a smart car in the internet of vehicles, an on board unit (on board unit, OBU), a road side unit (road side unit, RSU), a road side equipment (road side equipment, RSE), a telematics box (telematics box, T-Box), an electronic control unit (electronic control unit, ECU), or the like.

(2) An application, which can provide a corresponding service function for a user. The terminal device may run the application by installing application software of the application, to implement a service function of the application. For example, for a camera application that has a photographing service function, when the terminal device needs to install camera application software and run the camera application, the photographing service function may be provided for the user. For another example, the terminal device has a WeChat application, a QQ application, or the like that provides a chat service function. The terminal device needs to install WeChat application software or QQ application software, and run the WeChat application or the QQ application. The chat service function may be provided for the user.

It should be noted that the application software of the application may be developed by a vendor of the terminal device, or developed by an application vendor. This is not limited in this application.

Because previous considerations of software designers are incomplete or program functions are incomplete, or as service requirements of users for applications continuously increase, the software designers usually further need to develop a patch file of the application software after the application software is published, to upgrade the application software, so as to fix vulnerabilities of the application software or extend application functions.

(3) A software development device, a device used by the software designers to develop a patch file for application software. The software development device may belong to an application supplier or a terminal device supplier that can install the application software. A form of the software development device is not limited in this application. For example, the software development device may be a device such as a computer or a server.

(4) An upgrade server, a third-party device that can store a patch file of application software and provide a patch file download service for the terminal device. Optionally, the upgrade server may be an OTA server, a cloud server, or the like.

The upgrade server may establish a connection to the software development device, so as to obtain a patch file newly developed by the software development device, and store the patch file based on a corresponding version number. In addition, the upgrade server may establish a connection to the terminal device, so as to obtain an upgrade requirement of the terminal device for application software, select a plurality of patch files of the corresponding application software based on the upgrade requirement, combine the plurality of selected patch files, and send a combined patch file to the terminal device, so that the terminal device can upgrade the application software.

(5) A code segment, which is used to identify a code segment. A length of code included in the code segment is not limited in this application. The code segment may include one line of code, or may include a plurality of lines of code. In the following embodiments of this application, an example in which the code segment includes one line of code is used for description. In addition, it should be noted that, when the code segment is one line of code, the code segment identifier is a line number of the line of code.

(6) "A plurality of', which refers to two or more than two.

(7) "At least one", which refers to one or more.

(8) The term "and/or" describes an association relationship for describing associated objects and represents that three relationships may exist. For example, A and/or B may represent the following three cases: Only A exists, both A and B exist, and only B exists. The character "/" usually indicates an "or" relationship between the associated objects.

In addition, it should be understood that, in descriptions of this application, terms such as "first" and "second" are merely used for purposes of distinguishing descriptions and are neither intended to indicate or imply relative importance nor intended to indicate or imply a sequence.

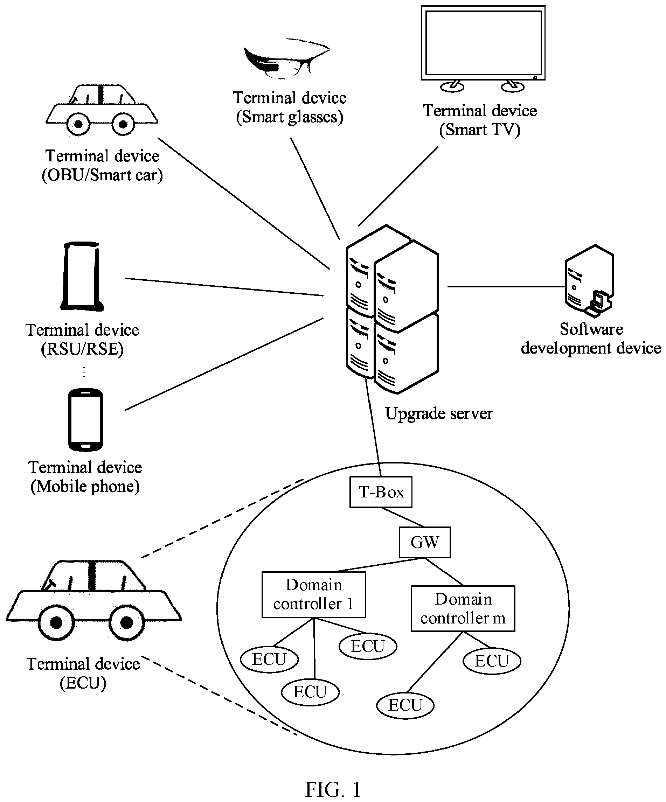

The following describes the embodiments of this application in detail with reference to the accompanying drawings. FIG. 1 shows an architecture of a software upgrade system to which a software upgrade method provided in this application is applicable. Refer to FIG. 1. The system includes a terminal device, an upgrade server, a software development device, and the like.

The software development device is configured to develop application software of an application, develop a patch file of the application software, and determine a version number of the developed patch file. Optionally, the software development device may belong to an application vendor or a terminal device vendor. This is not limited in this application.

The upgrade server receives, after establishing a connection to the software development device, a patch file of application software sent by the software development device, and stores the patch file based on a version number of each patch file. The upgrade server may further establish a connection to the terminal device, and interact with the terminal device to determine an upgrade requirement of the terminal device for application software, so as to select a plurality of intermediate patch files of the corresponding application software based on the upgrade requirement, combine the plurality of selected intermediate patch files, generate a combined patch file, and send the combined patch file to the terminal device, so that the terminal device can upgrade the application software based on the combined patch file. The upgrade server may also be referred to as an OTA server.

The terminal device may provide a corresponding service for a user by running application software. The terminal device may download the patch file of the application software from the upgrade server, and upgrade the installed application software.

According to different application scenarios, representation forms of the terminal device are also different, as shown in the figure. For example, in a conventional mobile communication scenario, the terminal device may be a mobile phone, a tablet computer, or the like. In an internet of things (internet of things, IoT) communication scenario, the terminal device may be a mobile internet device, a wearable device, or various wireless terminals in industry or smart household. In an internet of vehicles or vehicle to everything (vehicle to everything, V2X) communication scenario, the terminal device may be a vehicle, an OBU, an RSU, an RSE, an ECU, or the like.

It should be noted that, in the system provided in this application, the terminal device may establish a communication connection to the upgrade server by using a mobile communications network (including an access network and a core network), to perform communication interaction. The terminal device may alternatively establish a communication connection to the upgrade server through the mobile communications network by using at least one relay device to perform communication interaction. For example, when the terminal device is the ECU in the V2X communication scenario, as shown in the figure, the ECU may be finally connected to the upgrade server by using the following relay devices in order: a domain controller (domain controller, DC), a gateway (gateway, GW), and a T-Box.

The upgrade server may establish a communication connection to the software development device by using a conventional internet protocol (internet protocol, IP) network, to perform communication interaction.

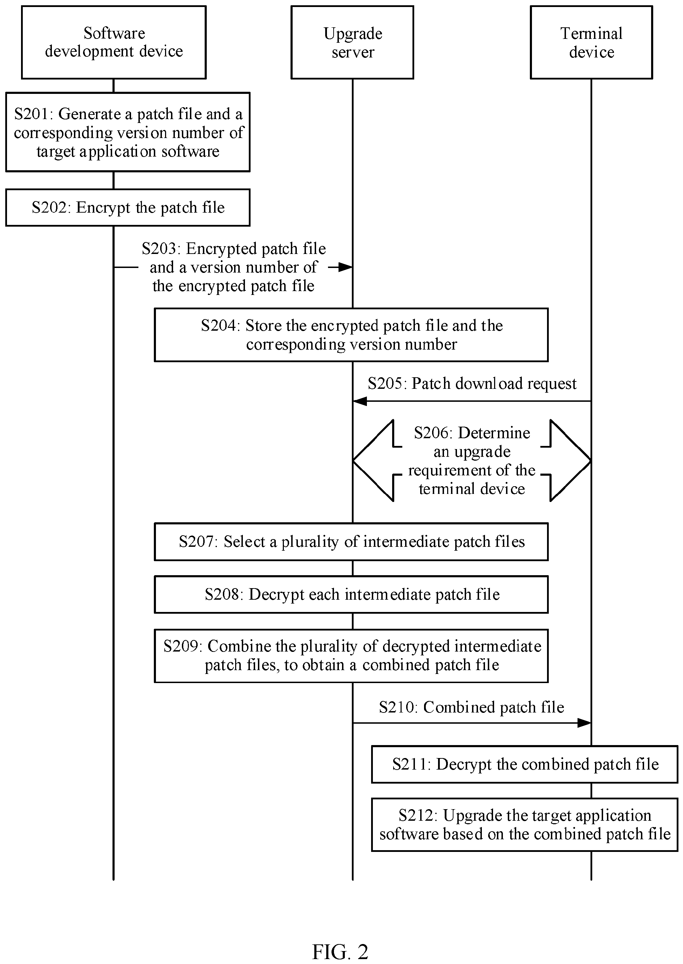

In addition, the architecture shown in FIG. 2 may be applied to a plurality of communication scenarios, for example, a 5th generation (The 5th Generation, 5G) communications system, a future 6th generation communications system and evolved other communications system, a long term evolution (Long Term Evolution, LTE) communications system, vehicle to everything (vehicle to everything, V2X), long term evolution-internet of vehicles (LTE-vehicle, LTE-V), vehicle to vehicle (vehicle to vehicle, V2V), internet of vehicles, machine type communications (Machine Type Communications, MTC), internet of things (internet of things, IoT), long term evolution-machine to machine (LTE-machine to machine, LTE-M), and machine to machine (machine to machine, M2M). This is not limited in this application.

In addition, it should be noted that, in the embodiments of this application, after the terminal device installs a patch file of a target version number of a target application, a current version number of the target application software that is already installed on the terminal device is the target version number. In other words, the version number of the patch file is a version number of the application software after the patch file is installed. In other words, the patch file and the application software actually share a version number numbering mechanism

To shorten a time consumed when a terminal device in a software upgrade system performs software upgrade, an embodiment of this application provides a software upgrade method. The method may be applicable to the software upgrade system shown in FIG. 1. The following describes in detail the method provided in this embodiment of this application with reference to a flowchart shown in FIG. 2. For ease of description and illustration, in the following embodiments, an example in which a code segment is a line of code (in this embodiment of this application, the code may also be referred to as software code) is used for specific description. In this case, a code segment identifier is a line number. It should be further noted that this embodiment does not constitute a limitation on the software upgrade method provided in this application.

S201: A software development device generates a patch file of target application software and a version number corresponding to the patch file, where the patch file includes at least one line of software code, and each line of software code includes a line number and code content.

The patch file with the version number is generated by the software development device based on software code of target application software of a previous version.

Optionally, the patch file further includes a patch header, and the patch header is used to indicate the target application software. Optionally, the patch header may further include information such as the version number corresponding to the patch file.

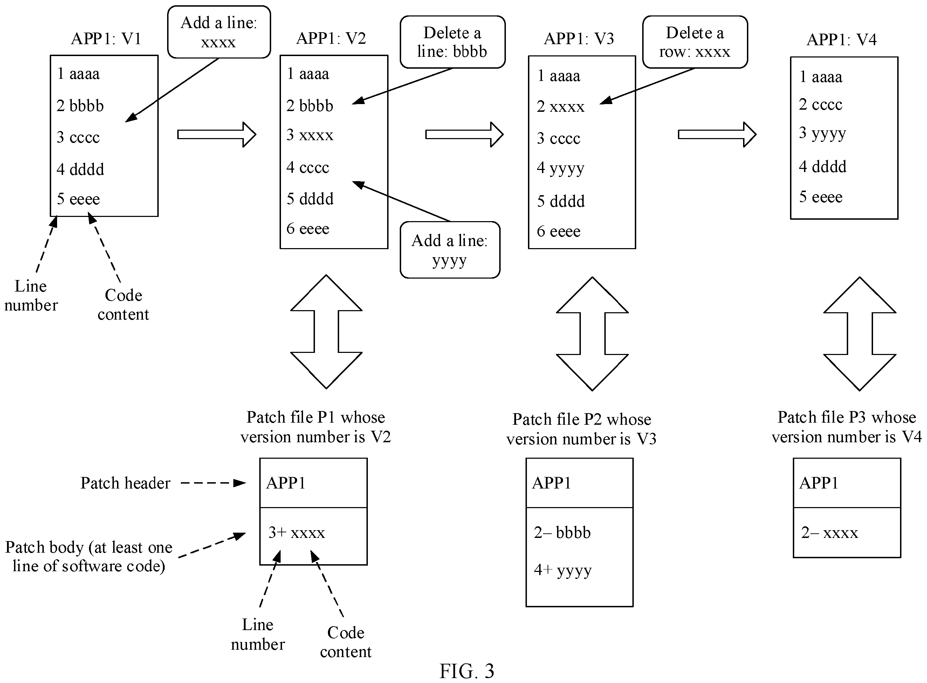

The following uses FIG. 3 as an example to describe a process of generating a patch file. It is assumed that a file name of the target application software is "APP1".

When the software development device needs to add a line xxxx between a second line and a third line based on target application software with a version number V1, to generate target application software with a version number V2, the software development device may generate a patch file P1 with the version number V2. In this way, a terminal device installed with the target application software with the version number V1 may upgrade the target application software to V2 (as shown in the figure) by downloading and installing the patch file P1.

When the software development device needs to delete the second line based on the target application software with the version number V2, and add a line yyyy between a fourth line and a fifth line, to generate target application software with a version number V3, the software development device may generate a patch file P2 with the version number V3. In this way, the terminal device installed with the target application software with the version number V2 may upgrade the target application software to V3 (as shown in the figure) by downloading and installing the patch file P2.

When the software development device needs to delete the second line based on the target application software with the version number V3, to generate target application software with a version number V4, the software development device may generate a patch file P3 with the version number V4. In this way, the terminal device installed with the target application software with the version number V3 may upgrade the target application software to V4 (as shown in the figure) by downloading and installing the patch file P3.

As shown in the figure, each line of software code in a file of each target application software includes two parts: a line number and code content. Each patch file also includes at least one line of software code (a patch body), and each line of software code also includes two parts: a line number (including not only an identifier of the line, but also an addition indication or a deletion indication) and code content. Each patch file further includes a patch header, and the patch header may include information indicating the target application software (for example, a file name of the target application software, or an identifier of the target application software).

S202: The software development device encrypts the patch file.

In this embodiment of this application, both a first security key and a first operation key are generated by the software development device for the target application software, where the first security key is used to encrypt code content in each patch file of the target application software, and the first operation key is used to encrypt a line number/software code in each patch file of the target application software.

It should be noted that, in this embodiment of this application, the software upgrade system may encrypt the patch file of the target application software in two encryption manners: a symmetric encryption manner and an asymmetric encryption manner.

First implementation: The system encrypts the patch file in the symmetric encryption manner. Optionally, the system may use various symmetric encryption manners such as an advanced encryption standard (advanced encryption standard, AES) algorithm to encrypt the patch file.

In this implementation, the software development device manages and maintains the first security key and the first operation key, notifies a software server of the first operation key, and notifies the terminal device of the first security key (optionally, further including the first operation key).

Second implementation: The system encrypts the patch file in the asymmetric encryption manner.

In this implementation, the software development device manages and maintains a security key pair (the first security key and a second security key) and an operation key pair (the first operation key and a second operation key).

The second security key is used by another device to decrypt code content in the patch file, and the second operation key is used by the another device to decrypt a line number in the patch file. Therefore, the software development device may notify the software server of the second operation key (optionally, further including the first operation key), and notify the terminal device of the second security key (optionally, further including the second operation key). Optionally, when S202 is performed, the software development device may encrypt the patch file by using, but not limited to, the following two implementations.

In a first implementation, the software development device encrypts code content included in each line of software code in the patch file by using the first security key; and the software development device encrypts a line number included in each line of software code in the patch file by using the first operation key.

When the patch file further includes a patch header, the software development device encrypts the patch header of the patch file by using the first security key.

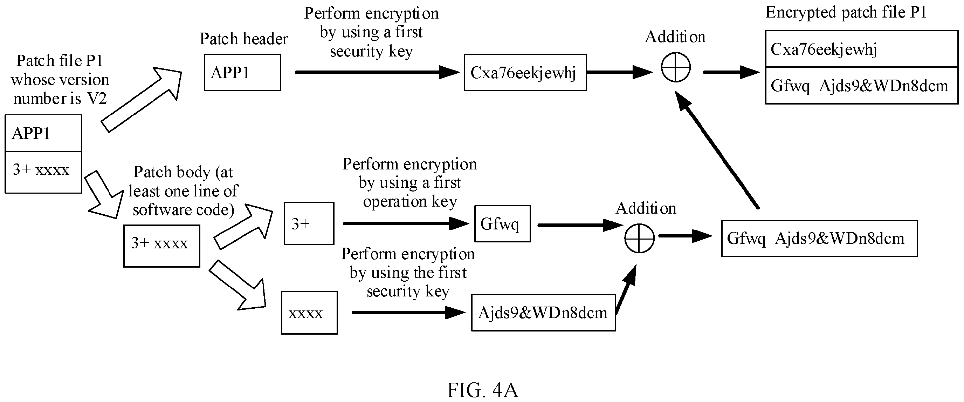

For example, the patch file P1 in FIG. 3 is used as an example. The software development device may encrypt, by using the first security key, the patch header and the code content included in each line of software code in the patch body, and encrypt, by using the first operation key, the line number included in each line of software code in the patch body, to finally obtain the encrypted patch file P1. For a specific encryption process, refer to FIG. 4A.

Optionally, to ensure that an upgrade server cannot determine a specific line number of a change in each line of software code in the patch file and ensure security of a line number in the patch file, the software development device may further offset the line number by using the following steps before encrypting the line number included in each line of software code in the patch body.

The software development device obtains a line number offset value of the target application software.

The software development device offsets, based on the line number offset value, the line number included in each line of software code. For example, the software development device may add the line number offset value to (or subtract the line number offset value from) the line number included in each line of software code.

Each piece of target application software corresponds to one line number offset value, and the line number offset value may be a random number. The line number offset value may be sent along with the patch file, for example, the line number offset value may be stored in a header of the patch file.

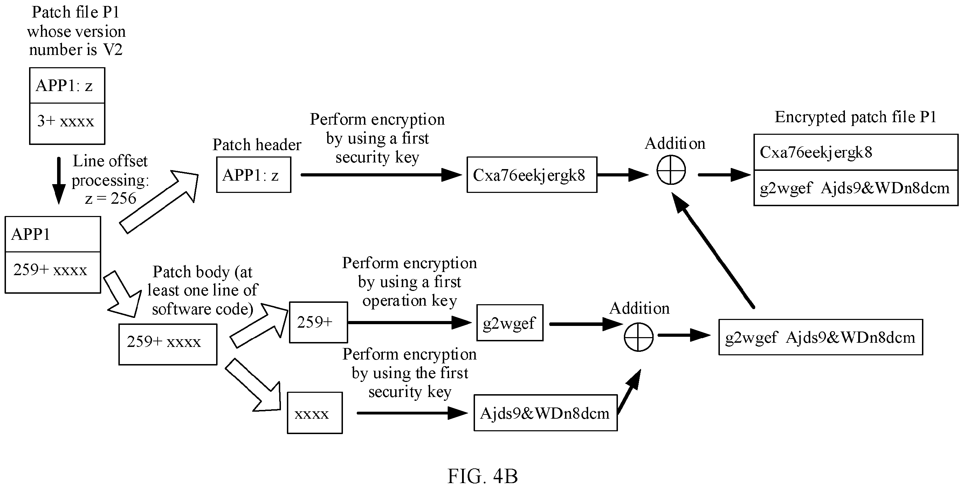

For example, the patch file P1 in FIG. 3 is still used as an example. The software development device first performs line offset on the line number included in each line of software code in the patch file P1, and adjusts a line number "3+" to "259+"; and then encrypts, by using the first security key, the patch header and the code content included in each line of software code in the patch body, and encrypts, by using the first operation key, a line number included in each line of software code in the patch body, to finally obtain the encrypted patch file P1. For a specific encryption process, refer to FIG. 4B.

In a second implementation, the software development device encrypts the code content of each line of software code in the patch file by using the first security key; and the software development device encrypts, by using the first operation key, a line number in the patch file and code content that is encrypted by using the first security key. When the patch file further includes a patch header, the software development device encrypts the patch header of the patch file by using the first security key.

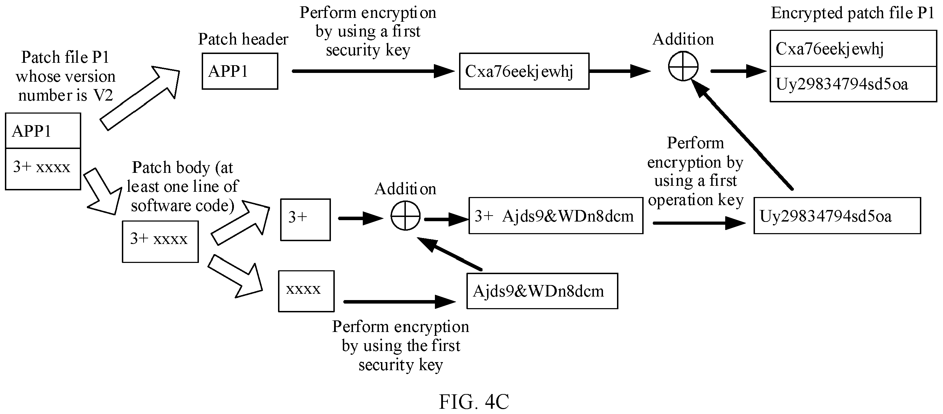

For example, the patch file P1 in FIG. 3 is still used as an example. The software development device may encrypt, by using the first security key, the patch header and the code content included in each line of software code in the patch body, and then encrypt, by using the first operation key, the line number and the encrypted code content that are included in each line of software code in the patch body, to finally obtain the encrypted patch file P1. For a specific encryption process, refer to FIG. 4C.

Optionally, to ensure security of the line number in the patch file, the software development device may further offset the line number before encrypting the line number included in each line of software code in the patch body. For a specific step, refer to the description of the line number offset in the first implementation. Details are not described herein again.

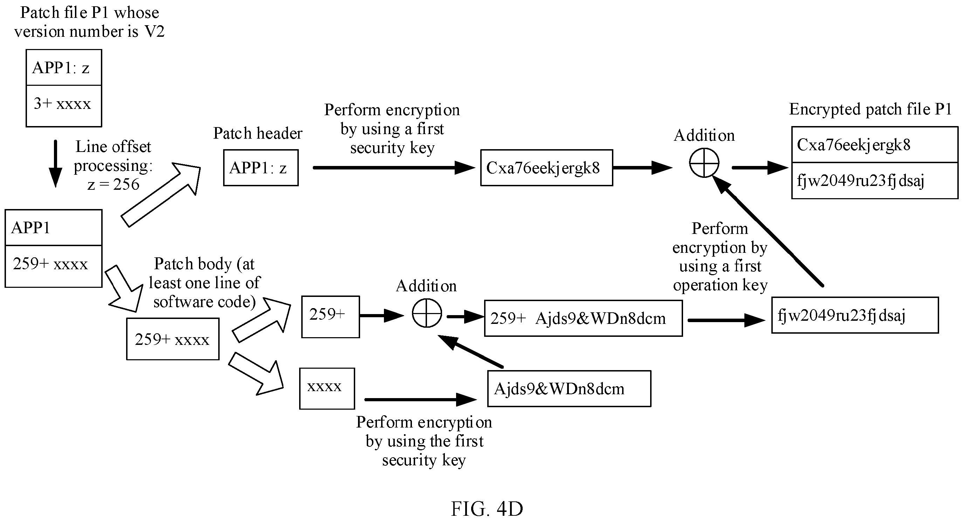

For example, the patch file P1 in FIG. 3 is still used as an example. The software development device first performs line offset on the line number included in each line of software code in the patch file P1, and adjusts a line number "3+" to "259+"; and then encrypts, by using the first security key, the patch header and the code content included in each line of software code in the patch body, and encrypts, by using the first operation key, the line number and the encrypted code content that are included in each line of software code in the patch body, to finally obtain the encrypted patch file P1. For a specific encryption process, refer to FIG. 4D.

According to step S202, the software development device may encrypt the line number and the code content in each line of software code in the patch file by using different keys. In this way, after the patch file is sent to the upgrade server, the upgrade server may decrypt only the encrypted line number in each line of software code, but cannot decrypt the code content in each line of software code. Therefore, the method can further ensure security of the code content in the patch file.

S203: The software development device sends the encrypted patch file and the version number corresponding to the patch file (or the encrypted patch file) to the upgrade server. The upgrade server receives the encrypted patch file and the corresponding version number of the target application software from the software development device.

In an implementation, the software development device may send information such as the information about the target application software and installation condition information of the patch file together to the upgrade server. The installation condition information of the patch file may include, but is not limited to, a constraint on hardware and/or software of the terminal device.

Optionally, in this embodiment of this application, the software development device and the upgrade server may perform communication interaction through an established transport layer security channel. For example, the transport layer security channel may be a transport layer security (Transport Layer Security, TLS) channel or a secure sockets layer (Secure Sockets Layer, SSL) channel.

S204: The upgrade server stores the encrypted patch file and the version number corresponding to the patch file that are received.

After further receiving the information such as the information about the target application software and the installation condition information of the patch file, the upgrade server also stores the information.

Optionally, after receiving an encrypted patch file with a new version number, the upgrade server may push the new version number to the terminal device; or the upgrade server may push the new version number to the terminal device regularly or periodically.

S205: The terminal device sends a patch download request for the target application software to the upgrade server. The upgrade server receives the patch download request for the target application software from the terminal device. S206: The upgrade server determines an upgrade requirement of the terminal device, that is, determines a current version number of the target application software that is already installed on the terminal device and a target version number of the target application software that is to be upgraded by the terminal device.

Optionally, the upgrade server may determine the upgrade requirement of the terminal device in, but not limited to, the following manners.

Manner 1: When the patch download request sent by the terminal device includes the current version number and the target version number, the upgrade server obtains the current version number and the target version number from the patch download request.

Manner 2: The upgrade server may determine, by communicating and interacting with the terminal device, whether the target application software is installed on the terminal device, hardware and/or software information of the terminal device, and the current version number; and then the upgrade server may determine the target version number based on the information such as the stored version number of the patch file and the installation condition information of the patch file.

Manner 3: The upgrade server may obtain the current version number from the patch download request, or determine the current version number by communicating and interacting with the terminal device; and then the upgrade server uses the stored latest version number as the target version number.

S207: The upgrade server selects, based on the current version number and the target version number, a plurality of intermediate patch files from locally stored encrypted patch files of the target application software, where a version number corresponding to each intermediate patch file is greater than the current version number and is less than or equal to the target version number.

S208: The upgrade server decrypts each intermediate patch file based on the second operation key.

From the specific description that the software development device encrypts the patch file in S202, it can be learned that, the system may encrypt the patch file in the symmetric encryption manner or the asymmetric encryption manner. Therefore, in this step, the following two implementations may also be correspondingly included.

First implementation: The system encrypts the patch file in the symmetric encryption manner.

In this implementation, the second operation key is the same as the first operation key.

Second implementation: The system encrypts the patch file in the asymmetric encryption manner.

In this implementation, the second operation key is the same as the first operation key.

The second operation key is received by the upgrade server from the software development device.

In addition, a manner in which the upgrade server decrypts the encrypted line number is related to an implementation in which the software development device encrypts the patch file. Therefore, correspondingly, the upgrade server may decrypt the encrypted line number in the intermediate patch file in, but not limited to, the following two implementations.

First implementation: When the software development device encrypts each patch file by using the foregoing first implementation, as shown in FIG. 4A or FIG. 4B, the upgrade server decrypts, by using the second operation key, the encrypted line number included in each line of software code of each intermediate patch file.

Second implementation: When the software development device encrypts each patch file by using the foregoing second implementation, as shown in FIG. 4C or FIG. 4D, the upgrade server decrypts, by using the second operation key, the encrypted line number and the encrypted software content that are included in each line of software code of each intermediate patch file.

S209: The upgrade server combines, based on the version numbers corresponding to the plurality of intermediate patch files and the line number of each line of software code in each decrypted intermediate patch file, the plurality of decrypted intermediate patch files to obtain a combined patch file of the target application software, where the combined patch file includes at least one line of software code, and each line of software code includes the line number and encrypted code content.

Optionally, the upgrade server may combine the plurality of decrypted intermediate patch files by using the following steps.

A1: The upgrade server sorts the plurality of decrypted intermediate patch files based on an order of the stored version numbers corresponding to the plurality of intermediate patch files, to obtain a file sequence, where a decrypted intermediate patch file with the earliest version number is located at a first place of the file sequence, and the decrypted intermediate patch file with the latest version number is located at a last place of the file sequence.

A2: The upgrade server sequentially combines all the decrypted intermediate patch files based on the line number of each line of software code in each of the decrypted intermediate patch files and based on an order of the file sequence, to obtain the combined patch file.

It should be noted that, when each intermediate patch file includes an encrypted patch header, the generated combined patch file also includes the encrypted patch header (that is, an encrypted patch header of one of the target patch files is copied to the combined patch file).

In an implementation, when the upgrade server performs the foregoing step A2, the following method may be used for implementation.

The upgrade server may first generate an empty combined patch file, and then copy the first decrypted intermediate patch file in the file sequence to the combined patch file.

Then, the upgrade server combines the second decrypted intermediate patch file with the combined patch file, which specifically includes the following steps.

The upgrade server copies, based on the line number of each line of software code in the second decrypted intermediate patch file, the line of software code to an appropriate location in the combined patch file, so as to ensure that the line numbers in the combined patch file are arranged in ascending order. For example, if a line number of a line of software code in the second decrypted intermediate patch file is "2", the line of software code is copied before the line number "3" in the combined patch file; if a line number of a line of software code in the second decrypted intermediate patch file is "4", the line of software code is copied after the line number "3" in the combined patch file. If a line number of a line of software code in the second decrypted intermediate patch file is "4", and software code whose line number is "4" also exists in the combined patch file, the line of software code in the second decrypted intermediate patch file is is copied after the software code whose line number is "4" in the combined patch file.

After copying all software code in the second decrypted intermediate patch file to the combined patch file, the upgrade server needs to adjust a line number of original software code (software code included in the combined patch file before all software code in the second decrypted intermediate patch file is copied) in the combined patch file except the software code in the second decrypted intermediate patch file in the combined patch file as follows.

The upgrade server sequentially determines, based on an ascending order of the line numbers, each line of software code in the second decrypted intermediate patch file that is copied to the combined patch file; and if a line number in the line of software code includes a deletion instruction "-", subtracts 1 from a line number of each line of original software code after the line of software code, or if a line number in the line of software code includes an addition instruction "+", adds 1 to each line of original software code after the line of software code.

Then, the upgrade server determines whether the combined patch file obtained after the line number of the original software code is adjusted has two adjacent lines of software code that meet the following cancellation condition: Line numbers are the same, code content is the same, a line number in one line includes the deletion instruction "-", and a line number in the other line includes the addition instruction "+". If the combined patch file obtained after the line number of the original software code is adjusted has two adjacent lines of software code that meet the following cancellation condition, the upgrade server deletes the two lines of software code (that is, the two adjacent lines of software code cancel each other).

The upgrade server obtains a next decrypted intermediate patch file from the file sequence, and continues to combine the next decrypted intermediate patch file with the combined patch file according to the foregoing steps until all decrypted intermediate patch files in the file sequence are combined into the combined patch file.

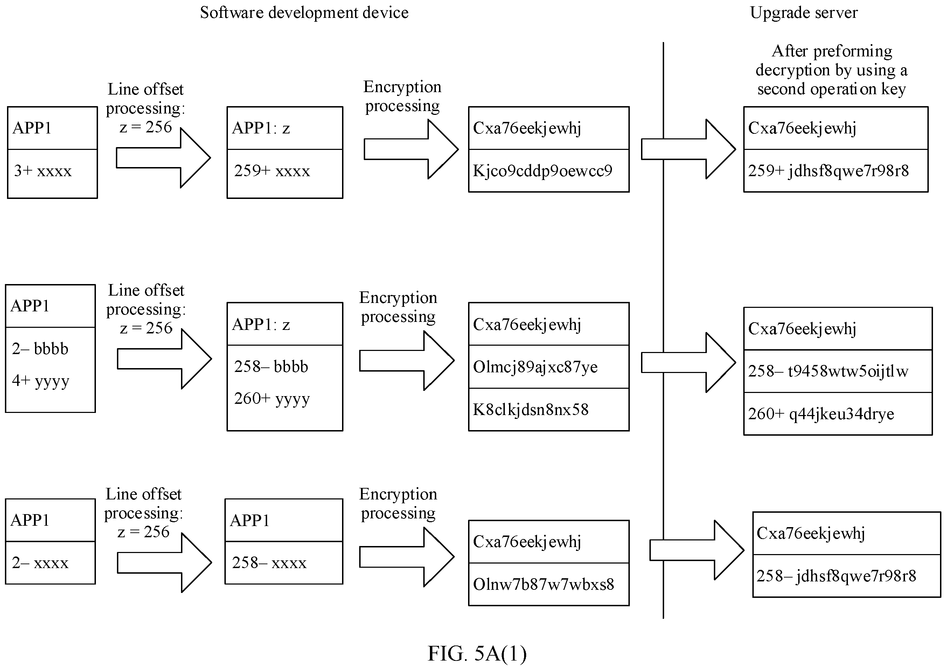

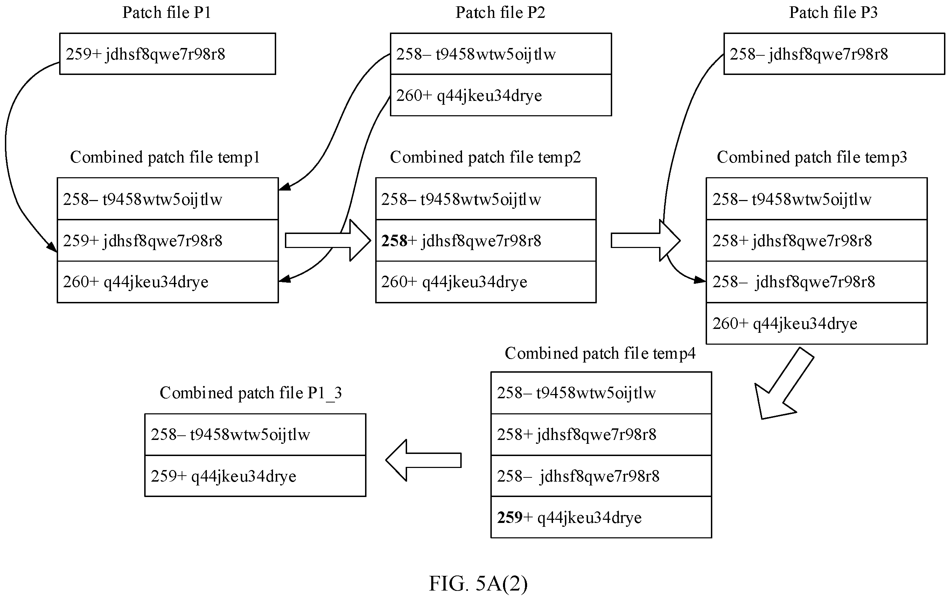

For example, the three patch files P1, P2, and P3 in FIG. 3 are still used as an example for description. Refer to FIG. 5A(1) and FIG. 5A(2). If the software development device encrypts each patch file by using the encryption method shown in FIG. 4D, after determining the three patch files as intermediate patch files, the upgrade server decrypts, by using the second operation key, the encrypted line number and the encrypted software content that are included in each line of software code of each intermediate patch file, to obtain three decrypted patch files shown in FIG. 5A(1). Then, the upgrade server combines the three decrypted intermediate patch files by using the combination method shown in FIG. 5A(2).

The upgrade server generates an empty combined patch file, and copies a line of software code in P1 to the combined patch file. Then, the upgrade server copies, based on a line number of each line of software code in P2, each line of software code in P2 to an appropriate location in the combined patch file, as shown by the temporary combined patch file temp1 in FIG. 5A(2). Because a line number "258-" that is of a first line of software code in P2 and that is added to the combined patch file includes the deletion instruction "-", the upgrade server subtracts 1 from the line number of the original software code in the combined patch file after the line of software code. To be specific, the line number "259+" of the original software code is changed to "258+", as shown by the temporary combined patch file temp2 in FIG. 5A(2). The upgrade server copies each line of software code in P3 to the original software code whose line number is "258+" in the combined patch file, as shown by the temporary combined patch file temp3 in FIG. 5A(2). Because the line number "258-" of the newly added software code in P3 includes the deletion instruction "-", the upgrade server subtracts 1 from the line number of the original software code after the software code. To be specific, the line number of the original software code in the line number "260+" is changed to "259+", as shown by the temporary combined patch file temp4 in FIG. 5A(2). In this case, because the adjacent second line and third line of software code in the combined patch file temp4 meet the cancellation condition, the software server deletes the two lines of software code, and finally obtains the combined patch file P1_3 obtained by combining the P1, P2, and P3.

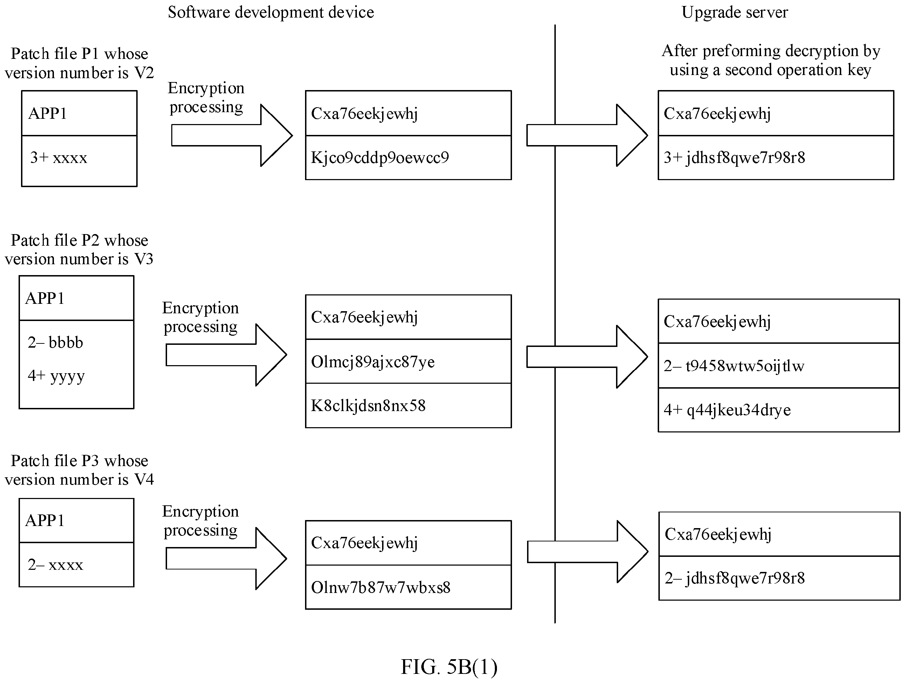

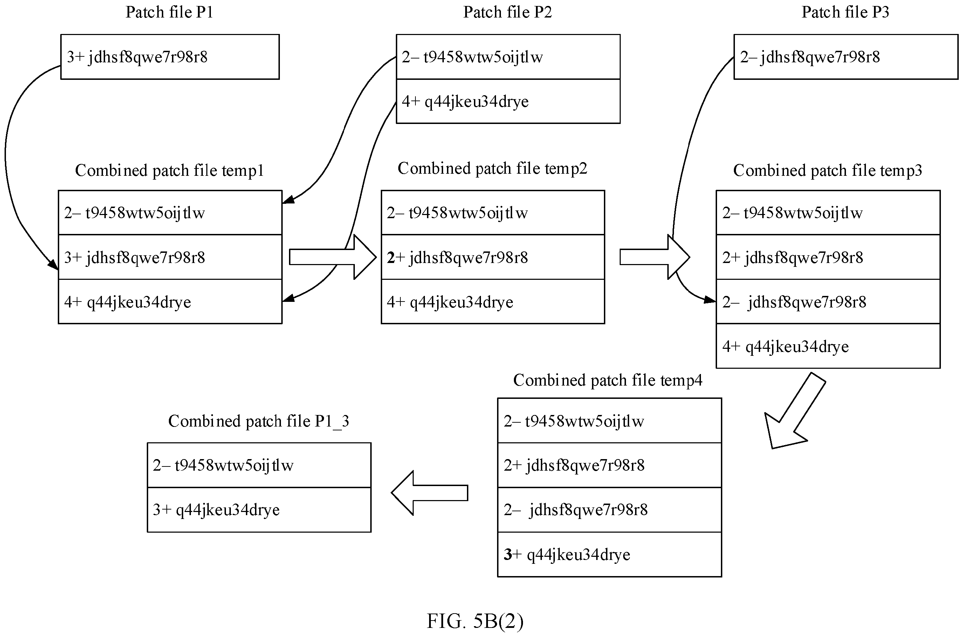

It should be noted that although FIG. 5A(2) does not show a patch header of the combined patch file, a header of the combined patch file is the same as a patch header of any patch file from P1 to P3 that is stored by the upgrade server. For example, the three patch files P1, P2, and P3 in FIG. 3 are still used as an example for description. Refer to FIG. 5B(1) and FIG. 5B(2). If the software development device encrypts each patch file by using the encryption method shown in FIG. 4C, after determining the three patch files as intermediate patch files, the upgrade server decrypts, by using the second operation key, the encrypted line number and the encrypted software content that are included in each line of software code of each intermediate patch file, to obtain three decrypted patch files shown in FIG. 5B(1). Then, the upgrade server combines the three decrypted target patch files by using the combination method shown in FIG. 5B(2).

The upgrade server generates an empty combined patch file, and copies a line of software code in P1 to the combined patch file. Then, the upgrade server copies, based on a line number of each line of software code in P2, each line of software code in P2 to an appropriate location in the combined patch file, as shown by the temporary combined patch file temp1 in FIG. 5B(2). Because a line number "2-" that is of a first line of software code in P2 and that is added to the combined patch file includes the deletion instruction "-", the upgrade server subtracts 1 from the line number of the original software code in the combined patch file after the line of software code. To be specific, the line number "3+" of the original software code is changed to "2+", as shown by the temporary combined patch file temp2 in FIG. 5B(2). The upgrade server copies each line of software code in P3 to the original software code whose line number is "2+" in the combined patch file, as shown by the temporary combined patch file temp3 in FIG. 5B(2). Because the line number "2-" of the newly added software code in P3 includes the deletion instruction "-", the upgrade server subtracts 1 from the line number of the original software code after the software code. To be specific, the line number of the original software code in the line number "4+" is changed to "3+", as shown by the temporary combined patch file temp4 in FIG. 5B(2). In this case, because the adjacent second line and third line of software code in the combined patch file temp4 meet the cancellation condition, the software server deletes the two lines of software code, and finally obtains the combined patch file P1_3 obtained by combining the P1, P2, and P3.

It should be noted that although FIG. 5B(2) does not show a patch header of the combined patch file, a header of the combined patch file is the same as a patch header of any patch file from P1 to P3 that is stored by the upgrade server. It can be learned from the foregoing description that, in a process of combining the plurality of decrypted intermediate patch files, the upgrade server may cancel some software code that meets the cancellation condition. In this way, a data amount of the combined patch files can be reduced, and transmission efficiency of the combined patch files can be improved. Compared with that in a conventional solution in which the upgrade server needs to send a plurality of intermediate patch files to the terminal device, in this solution, the terminal device may be upgraded to the target version number by sending one combined patch file, thereby simplifying a process of transmitting the patch file to the terminal device, and significantly improving patch file transmission efficiency.

S210: The upgrade server sends the combined patch file to the terminal device. The terminal device receives the combined patch file of the target application software from the upgrade server.

It should be noted that, in this embodiment of this application, the upgrade server may send the upgrade patch file in two manners.

Manner 1: To ensure security of the line number of the combined patch file in a transmission process, before obtaining the combined patch file and sending the combined patch file to the terminal device, the upgrade server may encrypt a line number of each line of software code in the combined patch file again.

Corresponding to S208, the upgrade server may encrypt the line number in the combined patch file in two implementations.

First implementation: When the software development device encrypts the patch file in the first implementation shown in FIG. 4A or FIG. 4B, and the upgrade server decrypts, by using the second operation key when performing S208, the encrypted line number included in each line of software code of each intermediate patch file, the upgrade server encrypts, by using the first operation key, a line number included in each line of software code in the combined patch file.

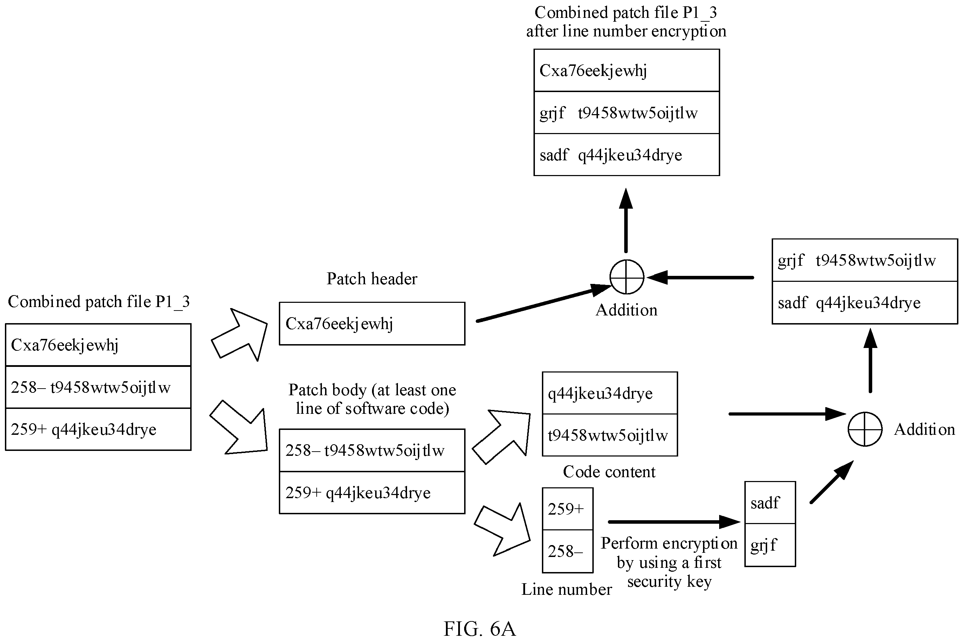

For example, it is assumed that the software development device encrypts the patch file in the implementation shown in FIG. 4A or FIG. 4B, and the combined patch file obtained by the upgrade server is P1_3. Refer to FIG. 6A. The upgrade server may extract a line number included in each line of software code in the combined patch file, encrypt the extracted line number by using the first operation key, and replace a corresponding line number in the combined patch file with each encrypted line number, to obtain the combined patch file P1_3 with the encrypted line numbers. Second implementation: When the software development device encrypts the patch file in the second implementation shown in FIG. 4C or FIG. 4D, and the upgrade server decrypts, by using the second operation key when performing S208, the encrypted line number and the encrypted software content that are included in each line of software code of each intermediate patch file, the upgrade server encrypts, by using the first operation key, the line number and the encrypted software content that are included in each line of software code in the combined patch file.

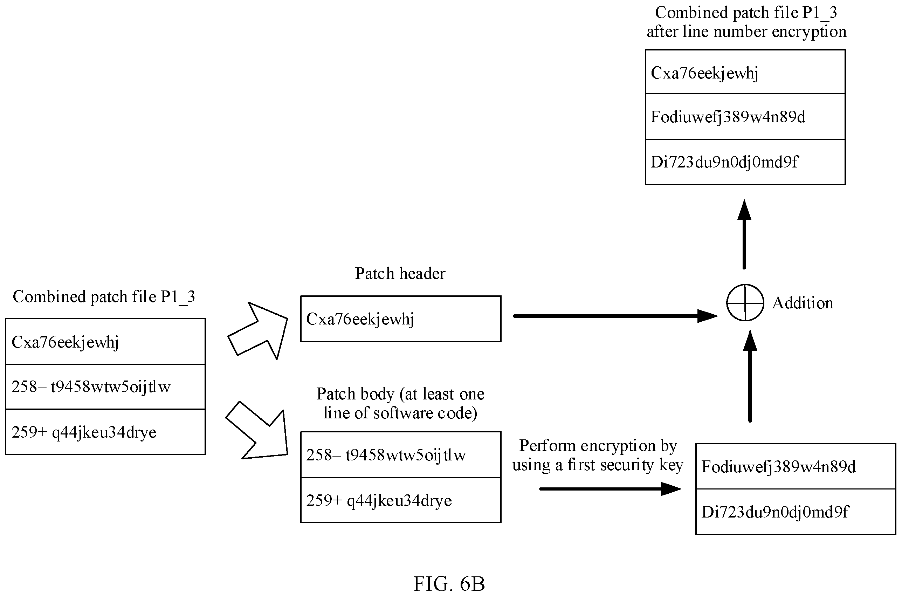

For example, it is assumed that the software development device encrypts the patch file in the implementation shown in FIG. 4A or FIG. 4B, and the combined patch file obtained by the upgrade server is P1_3. Refer to FIG. 6B. The upgrade server may extract each line of software code in the combined patch file, then encrypt each line of extracted software code by using the first operation key, and form the combined patch file P1_3 with encrypted line numbers based on each line of encrypted software code and an original patch header.

Manner 2: To improve a decryption speed of the combined patch file received by the terminal device and improve upgrade efficiency of the terminal device, the upgrade server may directly send the combined patch file obtained through combination to the terminal device.

Optionally, in this embodiment of this application, the upgrade server and the terminal device may communicate and interact with each other by establishing a transport layer security channel. For example, the transport layer security channel may be a TLS channel or an SSL channel.

It should be noted that, when the terminal device further needs to be connected to the upgrade server by using another intermediate device, the upgrade server may establish the transport layer security channel to the intermediate device, so as to securely transmit the combined patch file to the terminal device. For example, for the terminal device ECU shown in FIG. 1, the ECU can be connected to the upgrade server only by using a domain controller, a GW, and a T-Box. In this case, the upgrade server may establish a transport layer security channel to the T-Box, and then send the combined patch file to the T-Box by using the transport layer security channel. Then, the T-Box transfers the combined patch file to the ECU by using the GW and the domain controller.

S211: The terminal device decrypts the received combined patch file.

Based on different sending of the combined patch file by the upgrade server in S210, processes of decrypting the combined patch file by the terminal device are also different.

Manner 1: Before the upgrade server sends the combined patch file to the terminal device, and when the upgrade server encrypts a line number of each line of software code in the combined patch file,
a decryption processing process of the terminal device is related to an encryption process of the upgrade server and the software development device, and may include the following several implementations.

First implementation: When the software development device encrypts the patch file in the implementation shown in FIG. 4A, the upgrade server decrypts an encrypted line number in each target patch file by using the second operation key, and the upgrade server encrypts, by using the first operation key, a line number included in each line of software code in the combined patch file, the terminal device decrypts the encrypted combined patch file by using the following steps.

B1: The terminal device decrypts, by using the second security key, encrypted code content included in each line of software code in the encrypted combined patch file.

B2: The terminal device decrypts, by using the second operation key, the encrypted line number included in each line of software code in the encrypted combined patch file.

B3: When the encrypted combined patch file further includes an encrypted patch header, the terminal device decrypts the encrypted patch header by using the second security key.

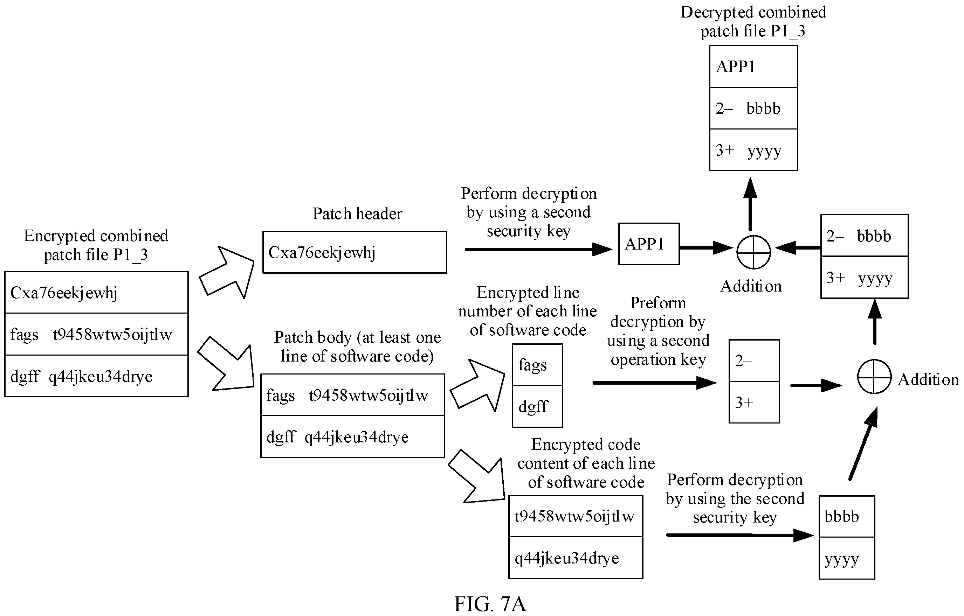

For example, it is assumed that the encrypted combined patch file received by the terminal device is P1_3, as shown on the left side in FIG. 7A. Refer to FIG. 7A. The terminal device may decrypt the encrypted patch header by using the second security key, to obtain "APP1". The terminal device may decrypt, by using the second operation key, an encrypted line number included in each line of software code, to obtain line numbers "2-" and "3+". The terminal device may decrypt, by using the second security key, encrypted code content included in each line of software code, to obtain code content "bbbb" and "yyyy". Then, the terminal device forms the decrypted combined patch file P1_3 by using the patch header, the line number, and the code content that are obtained through decryption.

Second implementation: When the software development device encrypts the patch file in the implementation shown in FIG. 4B, the upgrade server decrypts an encrypted line number in each target patch file by using the second operation key, and the upgrade server encrypts, by using the first operation key, a line number included in each line of software code in the combined patch file, the terminal device decrypts the encrypted combined patch file by using the following steps.

C1: The terminal device decrypts, by using the second security key, encrypted code content included in each line of software code in the encrypted combined patch file.

C2: The terminal device decrypts, by using the second operation key, the encrypted line number included in each line of software code in the encrypted combined patch file.

C3: When the encrypted combined patch file further includes an encrypted patch header, the terminal device decrypts the encrypted patch header by using the second security key.

C4: The terminal device performs row offset processing on the line number in the combined patch file by using the following steps.

The terminal device obtains a line number offset value of the target application software.

The terminal device offsets, based on the line number offset value, a line number included in each line of software code in the combined patch file. The row offset processing performed by the terminal device and the row offset processing performed by the software development device are inverse to each other. For example, the terminal device subtracts (or adds) the line number offset value from the line number included in each line of software code.

The terminal device may obtain the line number offset value from the decrypted patch header in the combined patch file, or obtain the stored line number offset value of the target application software.

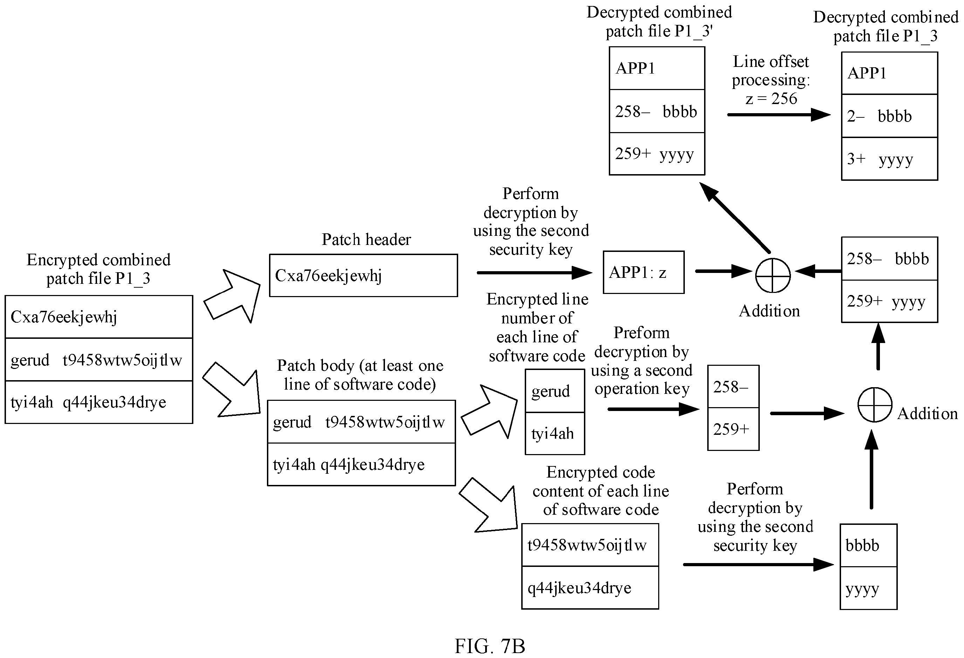

For example, it is assumed that the encrypted combined patch file received by the terminal device is P1_3, as shown on the left side in FIG. 7B. Refer to FIG. 7B. The terminal device may decrypt the encrypted patch header by using the second security key, to obtain "APP1: z (z=256). The terminal device may decrypt, by using the second operation key, the encrypted line number included in each line of software code, to obtain line numbers "258-" and "259+". The terminal device may decrypt, by using the second security key, the encrypted code content included in each line of software code, to obtain code content "bbbb" and "yyyy". Then, the terminal device forms a decrypted combined patch file P1_3' by using the decrypted patch header, the line number, and the code content. Finally, the terminal device performs, based on z, offset processing (by subtracting z from the line number) on the line number included in each line of software code, to obtain a final decrypted combined patch file P1_3.

Third implementation: When the software development device encrypts the patch file in the implementation shown in FIG. 4C, the upgrade server decrypts the encrypted line number and the encrypted software content in each target patch file by using the second operation key, and the upgrade server encrypts, by using the first operation key, the line number and the encrypted software content that are included in each line of software code in the combined patch file, the terminal device decrypts the encrypted combined patch file by using the following steps.

D1: The terminal device decrypts each line of software code (including an encrypted line number and encrypted code content) in the encrypted combined patch file by using the second operation key.

D2: The terminal device decrypts, by using the second security key, encrypted code content included in each line of software code in the encrypted combined patch file.

D3: When the encrypted combined patch file further includes an encrypted patch header, the terminal device decrypts the encrypted patch header by using the second security key.

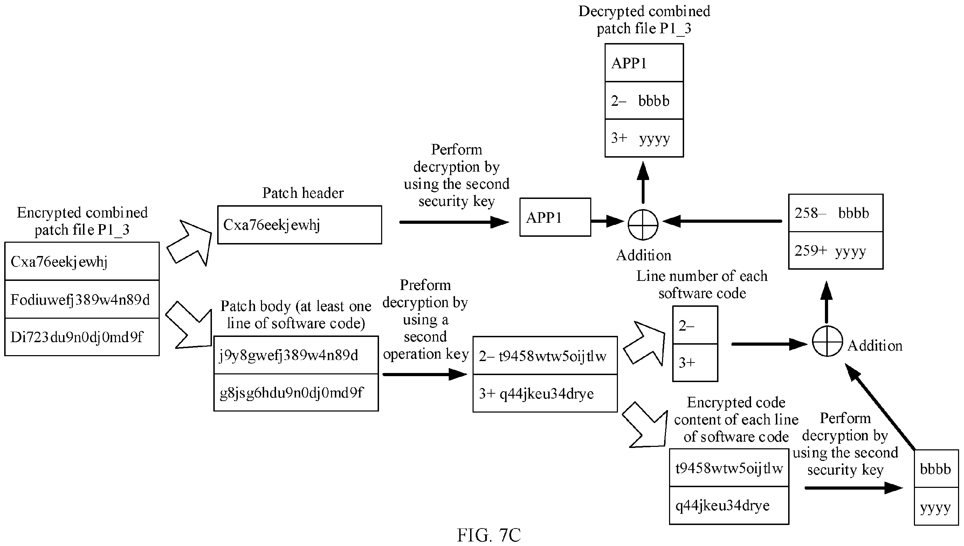

For example, it is assumed that the encrypted combined patch file received by the terminal device is P1_3, as shown on the left side in FIG. 7C. Refer to FIG. 7C. The terminal device may decrypt the encrypted patch header by using the second security key, to obtain "APP 1". The terminal device may decrypt each line of software code by using the second operation key, to obtain the line number and the corresponding encrypted code content. The terminal device may decrypt, by using the second security key, the encrypted code content included in each line of software code, to obtain code content "bbbb" and "yyyy". Then, the terminal device forms the decrypted combined patch file P1_3 by using the patch header, the line number, and the code content that are obtained through decryption.

Fourth implementation: When the software development device encrypts the patch file in the implementation shown in FIG. 4D, the upgrade server decrypts the encrypted line number and the encrypted software content in each target patch file by using the second operation key, and the upgrade server encrypts, by using the first operation key, the line number and the encrypted software content that are included in each line of software code in the combined patch file, the terminal device decrypts the encrypted combined patch file by using the following steps.

E1: The terminal device decrypts each line of software code (including an encrypted line number and encrypted code content) in the encrypted combined patch file by using the second operation key.

E2: The terminal device decrypts, by using the second security key, encrypted code content included in each line of software code in the encrypted combined patch file.

E3: When the encrypted combined patch file further includes an encrypted patch header, the terminal device decrypts the encrypted patch header by using the second security key.

E4: The terminal device performs row offset processing on the line number in the combined patch file. This is the same as step C4. Details are not described herein again.

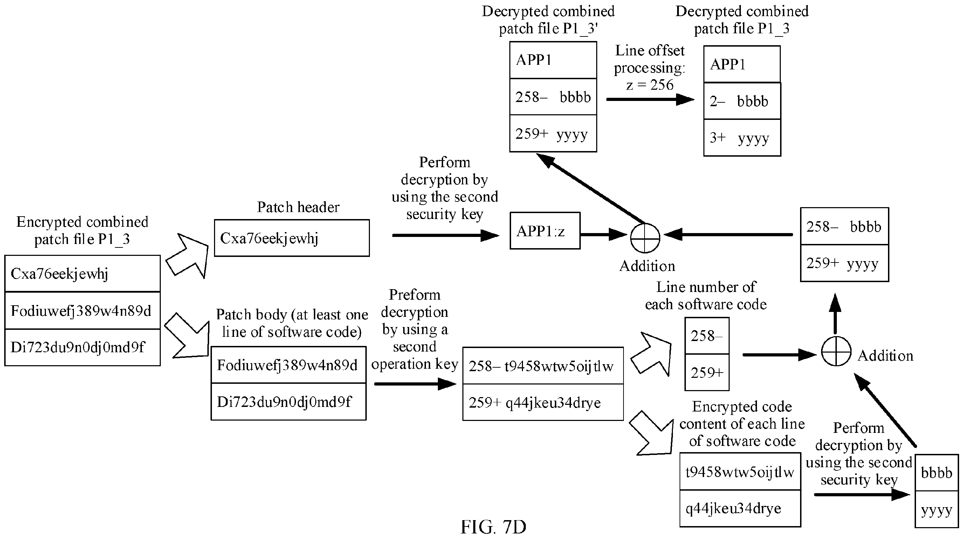

For example, it is assumed that the encrypted combined patch file received by the terminal device is P1_3, as shown on the left side in FIG. 7D. Refer to FIG. 7D. The terminal device may decrypt the encrypted patch header by using the second security key, to obtain "APP1: z (z=256). The terminal device may decrypt each line of software code by using the second operation key, to obtain the line number and the corresponding encrypted code content. The terminal device may decrypt, by using the second security key, the encrypted code content included in each line of software code, to obtain code content "bbbb" and "yyyy". Then, the terminal device forms the decrypted combined patch file P1_3' by using the patch header, the line number, and the code content that are obtained through decryption. Finally, the terminal device performs, based on z, offset processing (by subtracting z from the line number) on the line number included in each line of software code, to obtain the final decrypted combined patch file P1_3.

Manner 2: When the upgrade server directly sends the combined patch file obtained through combination to the terminal device,
a decryption processing process of the terminal device is related to an encryption process of the upgrade server and the software development device, and may include the following several implementations.

First implementation: When the software development device encrypts the patch file in the implementation shown in FIG. 4A, and the upgrade server decrypts the encrypted line number in each target patch file by using the second operation key, the terminal device decrypts the combined patch file by using the following steps.

F1: The terminal device decrypts, by using the second security key, encrypted code content included in each line of software code in the combined patch file.

F2: When the combined patch file further includes an encrypted patch header, the terminal device decrypts, by using the second security key, the encrypted patch header in the combined patch file.

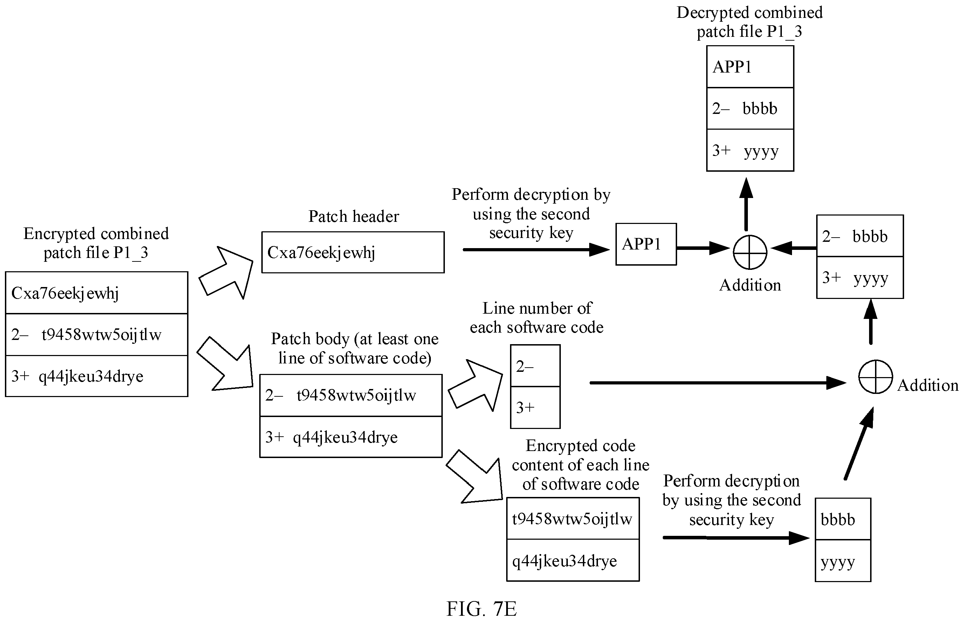

For example, it is assumed that the encrypted combined patch file received by the terminal device is P1_3, as shown on the left side in FIG. 7E. Refer to FIG. 7E. The terminal device may decrypt the encrypted patch header by using the second security key, to obtain "APP1". The terminal device may decrypt, by using the second security key, encrypted code content included in each line of software code, to obtain code content "bbbb" and "yyyy". Then, the terminal device forms the decrypted combined patch file P1_3 by using the decrypted patch header, the code content, and the line number.

Second implementation: When the software development device encrypts the patch file in the implementation shown in FIG. 4B, and the upgrade server decrypts the encrypted line number in each target patch file by using the second operation key, the terminal device decrypts the combined patch file by using the following steps.

F1: The terminal device decrypts, by using the second security key, encrypted code content included in each line of software code in the combined patch file.

F2: When the combined patch file further includes an encrypted patch header, the terminal device decrypts, by using the second security key, the encrypted patch header in the combined patch file.

F3: The terminal device performs row offset processing on the line number in the combined patch file. This is the same as step C4. Details are not described herein again.

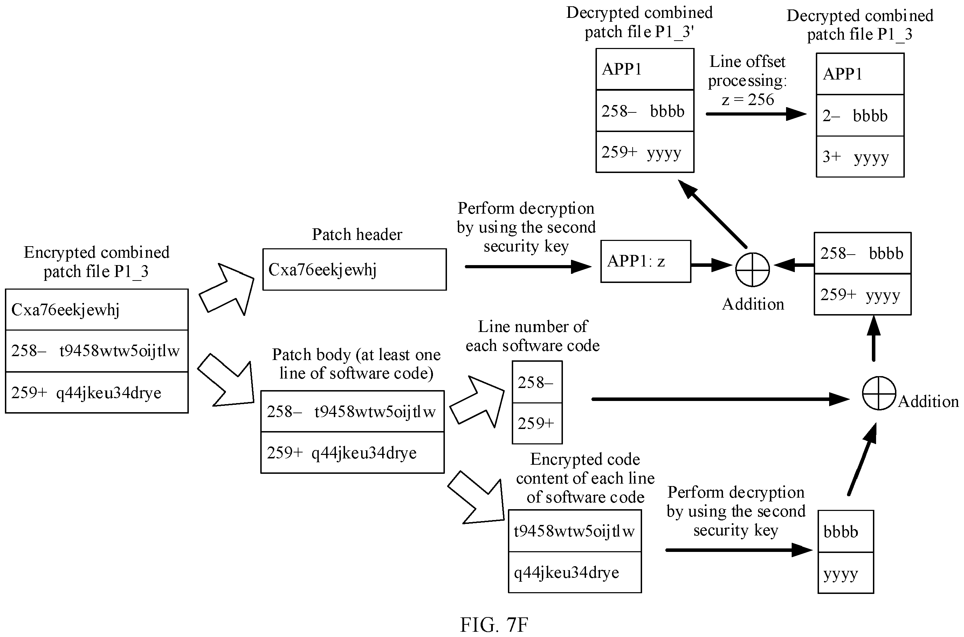

For example, it is assumed that the encrypted combined patch file received by the terminal device is P1_3, as shown on the left side in FIG. 7F. Refer to FIG. 7F. The terminal device may decrypt the encrypted patch header by using the second security key, to obtain "APP1: z (z=256). The terminal device may decrypt, by using the second security key, encrypted code content included in each line of software code, to obtain code content "bbbb" and "yyyy". Then, the terminal device forms the decrypted combined patch file P1_3' by using the patch header, the code content, and the line number that are obtained through decryption. Finally, the terminal device performs, based on z, offset processing (subtracting z from the line number) on the line number included in each line of software code, to obtain the final decrypted combined patch file P1_3.

Third implementation: When the software development device encrypts the patch file in the implementation shown in FIG. 4C, and the upgrade server decrypts the encrypted line number and the encrypted software content in each target patch file by using the second operation key, a process in which the terminal device decrypts the combined patch file is the same as that in the first implementation. Details are not described herein again.

Fourth implementation: When the software development device encrypts the patch file in the implementation shown in FIG. 4D, and the upgrade server decrypts the encrypted line number and the encrypted software content in each target patch file by using the second operation key, a process in which the terminal device decrypts the combined patch file is the same as that in the first implementation. Details are not described herein again.

S212: The terminal device upgrades the installed target application software based on a line number and code content that are included in each line of software code in the combined patch file.

The terminal device may install the combined patch file, so as to combine the combined patch file into the file of the target application software, and upgrade the target application software to the target version number. For a process in which the terminal device combines the combined patch file into the file of the target application software, refer to FIG. 5A(2) or FIG. 5B(2). Details are not described herein again.

An embodiment of this application provides a software upgrade method. In the foregoing solution, the upgrade server may combine the plurality of target patch files. In this way, the terminal device may download and install the combined patch file only once, to upgrade target application software from the current version number to the target version number. It is clear that the method can obviously shorten a time consumed by the terminal device to perform software upgrade, and can improve software upgrade efficiency of the terminal device. In addition, in a process of encrypting each patch file, the software development device encrypts the line number and the code content in each line of software code by using a different key. In this way, the upgrade server may decrypt only the encrypted line number in each line of software code, but cannot decrypt the code content in each line of software code. Therefore, this method can further ensure security of the code content in the patch file.

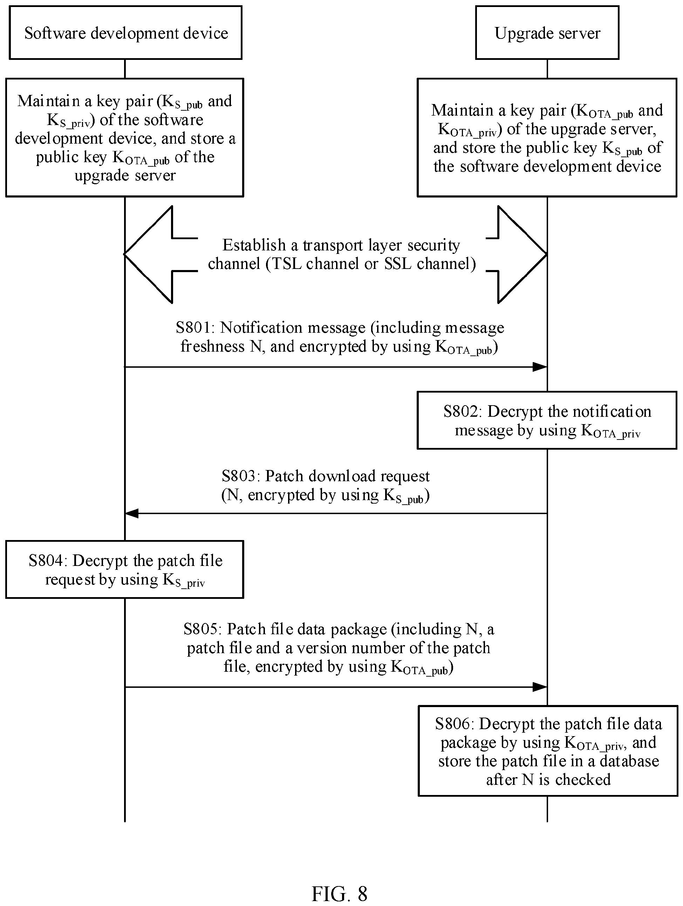

Based on the embodiment shown in FIG. 2, an embodiment of this application further provides a communication process between the software development device and the upgrade server, so that the software development device sends a patch file and a version number corresponding to the patch file to the upgrade server. The following describes the communication process in detail with reference to FIG. 8.

Before the software development device communicates with the upgrade server, the software development device maintains a key pair (a public key K_{S_pub} and a private key K_{S_priv}) of the software development device and stores a public key K_{OTA_pub} of the upgrade server, and the upgrade server maintains a key pair (a public key K_{OTA_pub} and a private key K_{OTA_priv}) of the upgrade server and stores the public key K_{S_pub} of the software development device. In addition, before communication, the software development device and the upgrade server may first establish a transport layer security channel (a TSL channel or an SSL channel). In this way, during communication and interaction between the software development device and the upgrade server, transmission may be performed through the transport layer security channel.

S801: The software development device generates a notification message after generating a patch file of a target application file, where the notification message is used to notify that a new patch file is ready in the software development device. The notification message includes message freshness N determined by the software development device for the current notification. After encrypting the notification message by using the public key K_{OTA_pub} of the upgrade server, the software development device sends the encrypted notification message to the upgrade server. S802: After receiving the encrypted notification message, the upgrade server decrypts the encrypted notification message by using the private key K_{OTA_priv} of the upgrade server, to obtain the notification message, and obtains N from the notification message. The upgrade server stores N for subsequent check.

S803: The upgrade server generates a patch download request that includes N. The patch download request is used to request the software development device to send a patch file. After encrypting the patch download request by using the public key K_{S_pub} of the software development device, the upgrade server sends the encrypted patch download request to the software development device.

S804: After receiving the encrypted patch download request, the software development device decrypts the encrypted patch download request by using the private key K_{S_priv} of the software development device, to obtain the patch download request, and obtains N from the patch download request.

S805: The software development device encapsulates the patch file, a version number, and N into a patch file data package, encrypts the patch file data package by using the public key K_{OTA_pub} of the upgrade server, and sends the encrypted patch file data package to the upgrade server.

S806: After receiving the encrypted patch file data package, the upgrade server decrypts the encrypted patch file data package by using the private key K_{OTA_priv} of the upgrade server, to obtain the patch file, the version number, and N in the encrypted patch file package. Then, the upgrade server checks N obtained from the patch file data package and N obtained in S802, and when determining that the two are completely the same, the upgrade server stores the patch file and the version number into a database of the upgrade server.

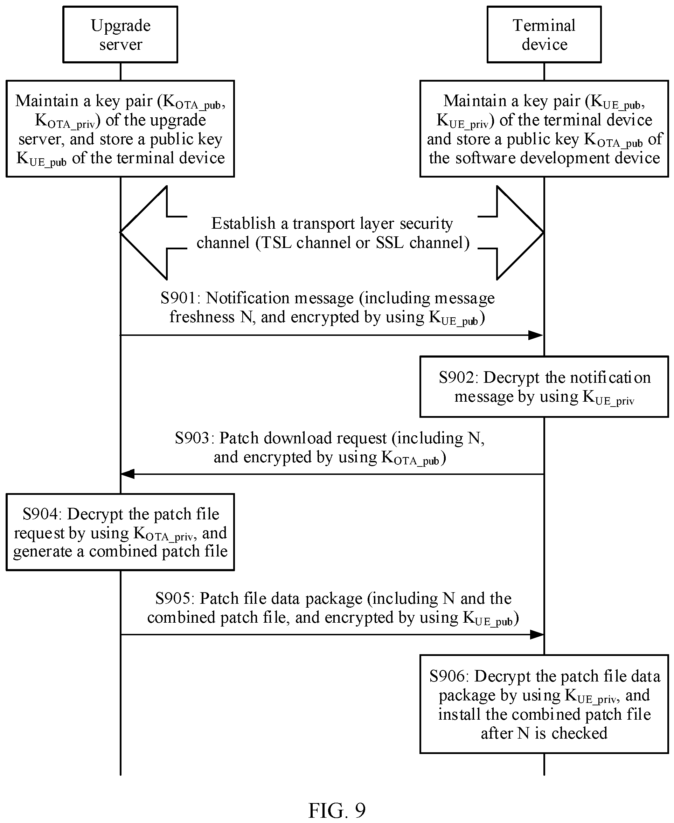

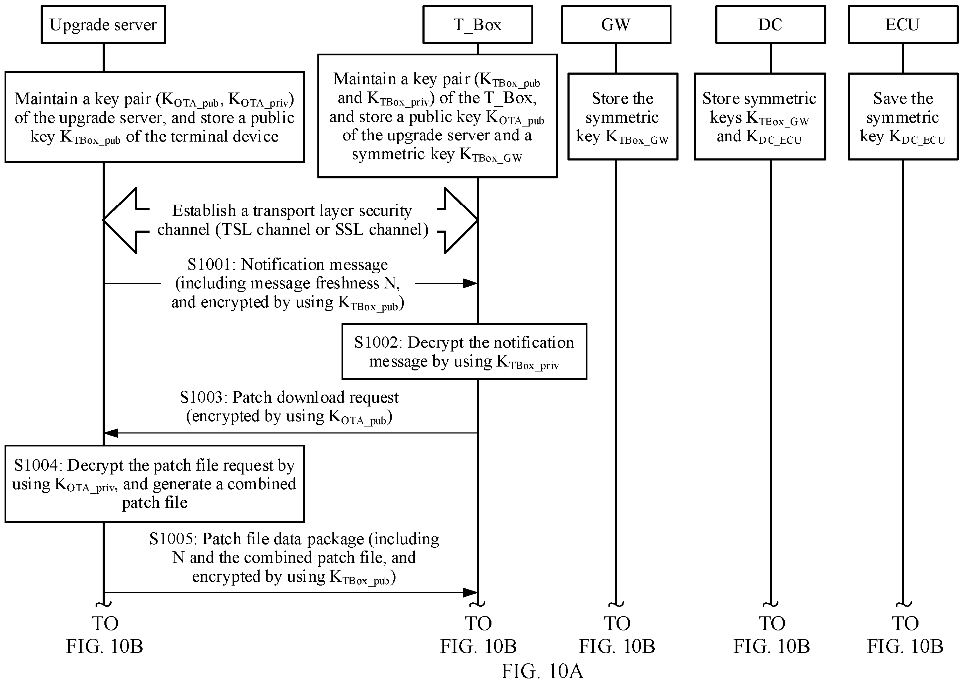

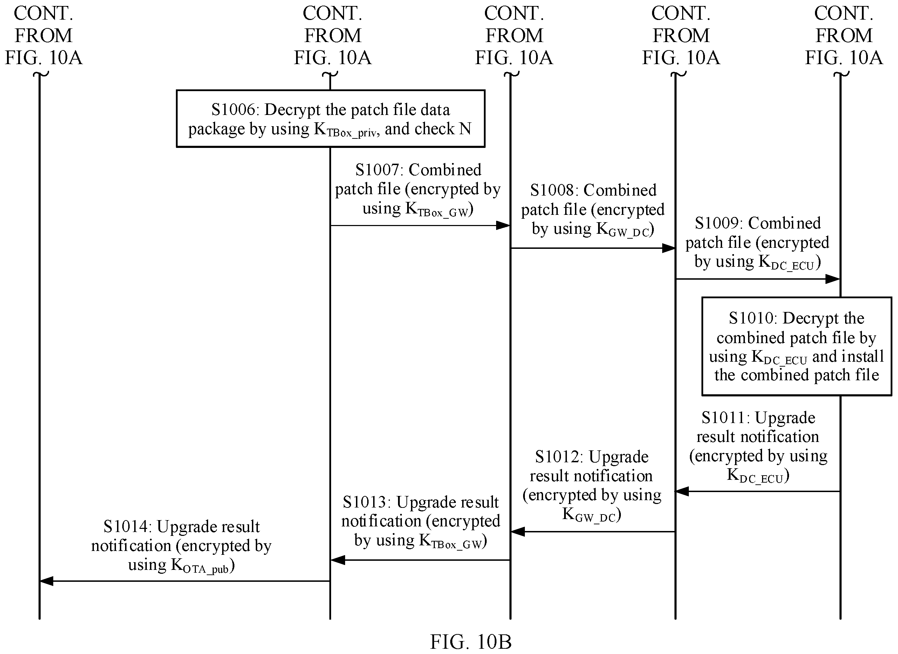

Based on the embodiment shown in FIG. 2, an embodiment of this application further provides a communication process between an upgrade server and a terminal device, so that the terminal device downloads a combined patch file from a software development device, as shown in FIG. 9, FIG. 10A, and FIG. 10B.

The following describes the communication process in detail with reference to FIG. 9. In FIG. 9, a scenario in which the terminal device is connected to the upgrade server without using another relay device is used as an example for description.

Before the upgrade server communicates with the terminal device, the upgrade server maintains a key pair (a public key K_{OTA_pub} and a private key K_{OTA_priv}) of the upgrade server, and stores a public key K_{UE_pub} of the terminal device. The upgrade server maintains a key pair (the public key K_{UE_pub} and a private key K_{UE_priv}) of the upgrade server, and stores the public key K_{OTA_pub} of the upgrade server. In addition, before communication, the upgrade server and the terminal device may first establish a transport layer security channel (a TSL channel or an SSL channel). In this way, when the upgrade server and the terminal device communicate and interact with each other, transmission may be performed through the transport layer security channel.

S901: The upgrade server generates a notification message after receiving a new patch file of target application software from a software development device, or generates the notification message regularly or periodically. The notification message is used to notify the upgrade server that a new patch file is ready. The notification message includes message freshness N determined by the upgrade server for the current notification. After encrypting the notification message by using the public key K_{UE_pub} of the terminal device, the upgrade server sends the encrypted notification message to the terminal device.

S902: After receiving the encrypted notification message, the terminal device decrypts the encrypted notification message by using the private key K_{UE_priv} of the terminal device, to obtain the notification message, and obtains N from the notification message. The terminal device stores N, to facilitate subsequent check.

S903: The terminal device generates a patch download request including N. The patch download request is used to request the upgrade server to send a patch file. The terminal device encrypts the patch download request by using the public key K_{OTA_pub} of the upgrade server, and sends the encrypted patch download request to the upgrade server. The patch download request includes a current version number of the target application software that is already installed on the terminal device, and a target version number of the target application software that is to be upgraded by the terminal device.

S904: After receiving the encrypted patch download request, the upgrade server decrypts the encrypted patch download request by using the private key K_{OTA_priv} of the upgrade server, to obtain the patch download request, and obtains N, the current version number, and the target version number from the patch download request. The upgrade server selects, based on the current version number and the target version number, a plurality of target patch files from patch files that are of the target application software and that are stored in a local database, and then combines the plurality of target patch files to generate a combined patch file. For a process in which the upgrade server generates the combined patch file, refer to descriptions in S208 to S210 in the embodiment shown in FIG. 2. Details are not described herein again.

S905: The upgrade server encapsulates the combined patch file and N into a patch file data package, encrypts the patch file data package by using the public key K_{UE_pub} of the terminal device, and finally sends the encrypted patch file data package to the terminal device.

S906: After receiving the encrypted patch file data package, the terminal device decrypts the encrypted patch file data package by using the private key K_{UE_priv} of the terminal device, to obtain the combined patch file and N in the encrypted patch file data package. Then, the terminal device checks N obtained from the patch file data package and N obtained in S902, and when determining that the two are completely the same, the terminal device installs the combined patch file, so as to upgrade the target application software to the target version number.

The following describes a communication process between the upgrade server and the terminal device with reference to FIG. 10A and FIG. 10B. In FIG. 10A and FIG. 10B, a scenario in which the terminal device is an ECU and the ECU is connected to the upgrade server by using another relay device (a DC, a GW, and a T_Box) is used as an example for description.

Before the upgrade server communicates with the terminal device, the upgrade server maintains a key pair (a public key K_{OTA_pub} and a private key K_{OTA_priv}) of the upgrade server, and stores a public key K_{TBox_pub} of the T_Box. The upgrade server maintains a key pair (a public key K_{TBox_pub} and a private key K_{TBox_priv}) of the upgrade server, and stores the public key K_{OTA_pub} of the upgrade server. In addition, before communication, the upgrade server and the T Box may first establish a transport layer security channel (a TSL channel or an SSL channel). In this way, when the upgrade server and the T Box communicate and interact with each other, transmission may be performed through the transport layer security channel. In addition, the T Box and the GW further store a symmetric key K_{Tbox_GW}, used to encrypt and decrypt a message transmitted between the T Box and the GW. The GW and the DC store a symmetric key K_{GW_DC}, used to encrypt and decrypt a message transmitted between the GW and the DC. The DC and the ECU store a symmetric key K_{DC_ECU}, used to encrypt and decrypt a message transmitted between the DC and the ECU. S1001: The upgrade server generates a notification message after receiving a new patch file of target application software from a software development device, or generates the notification message regularly or periodically. The notification message is used to notify the upgrade server that a new patch file is ready. The notification message includes message freshness N determined by the upgrade server for the current notification. After encrypting the notification message by using the public key K_{TBox_pub} of the T_Box, the upgrade server sends the encrypted notification message to the T Box.

S1002: After receiving the encrypted notification message, the T Box decrypts the encrypted notification message by using the private key K_{TBox_priv} of the T Box, to obtain the notification message, and obtains N from the notification message. The T Box stores N for subsequent checking.

S1003: The T Box generates a patch download request that includes N. The patch download request is used to request the upgrade server to send a patch file. The T Box encrypts the patch download request by using the public key K_{OTA_pub} of the upgrade server, and sends the encrypted patch download request to the upgrade server. The patch download request includes a current version number of the target application software that is already installed in the T Box, and a target version number of the target application software that is to be upgraded by the T Box.

S1004: After receiving the encrypted patch download request, the upgrade server decrypts the encrypted patch download request by using the private key K_{OTA_priv} of the upgrade server, to obtain the patch download request, and obtains N, the current version number, and the target version number from the patch download request. The upgrade server selects, based on the current version number and the target version number, a plurality of target patch files from patch files that are of the target application software and that are stored in a local database, and then combines the plurality of target patch files to generate a combined patch file. For a process in which the upgrade server generates the combined patch file, refer to descriptions in S208 to S210 in the embodiment shown in FIG. 2. Details are not described herein again.

S1005: The upgrade server encapsulates the combined patch file and N into a patch file data package, encrypts the patch file data package by using the public key K_{TBox_pub} of the T Box, and finally sends the encrypted patch file data package to the T Box.

S1006: After receiving the encrypted patch file data package, the T Box decrypts the patch file data package by using the private key K_{TBox_priv} of the T Box, to obtain the combined patch file and N in the patch file data package. Then, the T Box checks N obtained from the patch file data package and N obtained in S902, to determine that the two are completely the same.

S1007: The T_Box encrypts the combined patch file by using the symmetric key K_{TBox_GW}, and sends the encrypted combined patch file to the GW.

S1008: After receiving the encrypted combined patch file, the GW decrypts the encrypted combined patch file by using the symmetric key K_{TBox_GW}, to obtain the combined patch file; and then encrypts the combined patch file by using the symmetric key K_{GW_DC}, and sends the encrypted combined patch file to the DC.

S1009: After receiving the encrypted combined patch file, the DC decrypts the encrypted combined patch file by using the symmetric key K_{GW_DC}, to obtain the combined patch file; and then encrypts the combined patch file by using the symmetric key K_{DC_ECU}, and sends the encrypted combined patch file to the ECU.

S1010: After receiving the encrypted combined patch file, the ECU decrypts the encrypted combined patch file by using the symmetric key K_{DC_ECU}, to obtain the combined patch file; and then the terminal device installs the combined patch file, so as to upgrade the target application software to the target version number.

S1011: After the installation of the ECU is completed, generate an upgrade result notification, encrypt the upgrade result notification by using the symmetric key K_{DC_ECU}, and send the encrypted upgrade result notification to the DC. S1012: After receiving the decrypted upgrade result notification, the DC decrypts the upgrade result notification by using the symmetric key K_{DC_ECU} to obtain the upgrade result notification, encrypts the upgrade result notification by using the symmetric key K_{GW_DC}, and sends the encrypted upgrade result notification to the GW.

S1013: After receiving the decrypted upgrade result notification, the GW decrypts the upgrade result notification by using the symmetric key K_{GW_DC}, to obtain the upgrade result notification; and then encrypts the upgrade result notification by using the symmetric key K_{TBOX_GW}, and sends the encrypted upgrade result notification to the T Box. S1014: After receiving the decrypted upgrade result notification, the T_Box decrypts the upgrade result notification by using the symmetric key K_{TBox_GW}, to obtain the upgrade result notification, encrypts the upgrade result notification by using the public key K_{OTA_puk} of the upgrade server, and sends the encrypted upgrade result notification to the upgrade server.

After receiving the encrypted upgrade result notification, the upgrade server decrypts the upgrade result notification by using the private key K_{OTA_priv} of the upgrade server, to obtain the upgrade result notification.

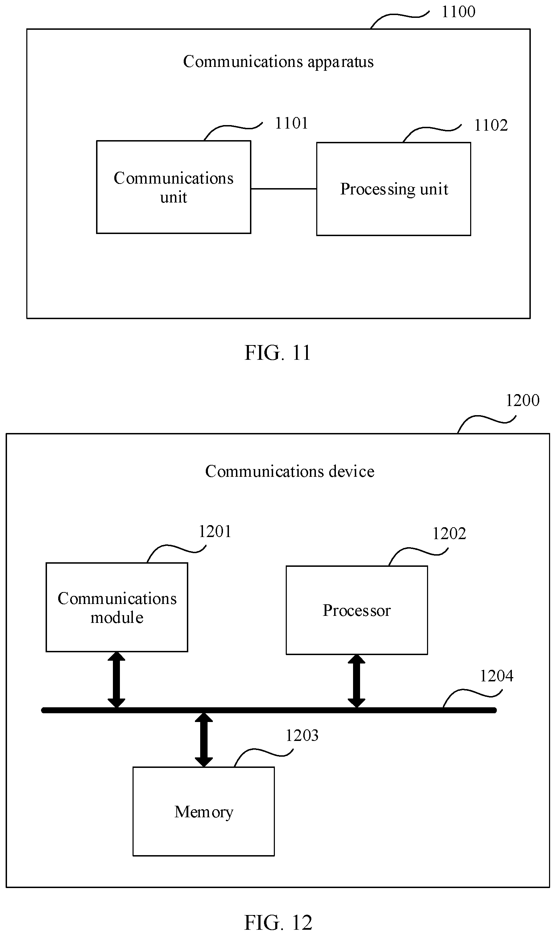

Based on a same technical concept, an embodiment of this application further provides a communications apparatus. A structure of the apparatus is that shown in FIG. 11, and the apparatus includes a communications unit 1101 and a processing unit 1102. The communications apparatus 1100 may be applied to the software development device, the software server, or the terminal device in the software upgrade system shown in FIG. 1, and may implement the software upgrade method provided in the foregoing embodiments and examples.

The communications unit 1101 is configured to receive and send data.

When the communications apparatus 1100 is applied to the software development device or the software server, the communications unit 1101 may also be referred to as a physical interface, a communications module, a communications interface, or an input/output interface. The communications apparatus 1100 may be connected to a network cable or a cable by using the communications unit, to establish a physical connection to another device. When the communications apparatus 1100 is applied to the terminal device, the communications unit 1101 may also be referred to as a transceiver, and may be implemented by using a mobile communications module and/or a wireless communications module.

The mobile communications module may provide a wireless communication solution that is applied to the terminal device and that includes 2G, 3G, 4G, 5G, or the like. The mobile communications module may include at least one antenna, at least one filter, a switch, a power amplifier, a low noise amplifier (low noise amplifier, LNA), and the like. The terminal device may access a mobile communications network by using the mobile communications module, and then access a forwarding device in the computing network by using the mobile communications network.

The wireless communications module may provide a wireless communication solution that includes a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC), and the like and that is applied to the terminal device. The wireless communications module 160 may include at least one antenna and one or more components of at least one communications processing module. The terminal device may access a wireless communications network by using the wireless communications module, and then access a forwarding device in a computing network by using the wireless communications network.

The following describes specific functions of the processing unit 1102 when the communications apparatus 1100 is applied to the software development device.

In a first implementation, the processing unit 1102 is configured to generate a patch file of target application software and a version number corresponding to the patch file, where the patch file includes a first code segment, and the first code segment includes a first code segment identifier and first code content. Encrypting the patch file includes: encrypting the first code content based on a first security key, and encrypting, based on a first operation key, the first code segment identifier and the first code content that is encrypted by using the first security key, where the first operation key is different from the first security key. The encrypted patch file and the version number corresponding to the patch file are sent to the upgrade server by using the communications unit 1101.

Optionally, the processing unit 1102 is further configured to:
obtain an identifier offset value of the target application software before encrypting, based on the first operation key, the first code segment identifier and the first code content that is encrypted by using the first security key; and offset the first code segment identifier based on the identifier offset value.

Optionally, the patch file further includes a patch header, where the patch header is used to indicate the target application software; and when encrypting the patch file, the processing unit 1102 is further configured to:
encrypt the patch header based on the first security key.

Optionally, the patch file includes at least one first code segment, the first code segment is a line of first code, and the first code segment identifier is a line number of the first code.

In a second implementation, the processing unit 1102 is configured to generate a patch file of target application software and a version number corresponding to the patch file, where the patch file includes a first code segment, and the first code segment includes a first code segment identifier and first code content. Encrypting the patch file includes: encrypting the first code content based on a first security key, and encrypting the first code segment identifier based on a first operation key, where the first operation key is different from the first security key. The encrypted patch file and the version number corresponding to the patch file are sent to an upgrade server by using the communications unit 1101.

Optionally, the processing unit 1102 is further configured to:
obtain an identifier offset value of the target application software before the first code segment identifier is encrypted based on the first operation key; and offset the first code segment identifier based on the identifier offset value.

Optionally, the patch file further includes a patch header, where the patch header is used to indicate the target application software.

When encrypting the patch file, the processing unit 1102 is further configured to:
encrypt the patch header based on the first security key.

The following describes specific functions of the processing unit 1102 when the communications apparatus 1100 is applied to an upgrade server.

In a first implementation, the processing unit 1102 is configured to:
store an encrypted patch file of target application software and a version number corresponding to the patch file, where the encrypted patch file includes an encrypted first code segment, the encrypted first code segment is obtained by encrypting, by using a first operation key, a first code segment identifier and first code content that is encrypted by using a first security key, and the first operation key is different from the first security key;
receive a patch download request for the target application software from a terminal device by using the communications unit 1101;
determine, based on the patch download request, a current version number of the target application software that is already installed on the terminal device and a target version number of the target application software that is to be upgraded by the terminal device;
determine, based on the current version number and the target version number, an intermediate patch file from a locally stored encrypted patch file of the target application software, where the intermediate patch file is an encrypted patch file whose version number is greater than the current version number and less than or equal to the target version number,
when there are a plurality of intermediate patch files, decrypt each intermediate patch file based on a second operation key, where the decryption includes decrypting an encrypted first code segment included in each intermediate patch file, to obtain a first code segment identifier of the first code segment in each intermediate patch file and first code content that is encrypted by using the first security key;
combine the plurality of decrypted intermediate patch files based on version numbers corresponding to the plurality of intermediate patch files and a first code segment identifier included in the first code segment in each decrypted intermediate patch file, to obtain a combined patch file of the target application software, where the combined patch file includes an updated first code segment, and the updated first code segment includes the first code content that is encrypted by using the first security key and the updated first code segment identifier;
encrypt the combined patch file based on the first operation key, where the updated first code segment in the combined patch file is encrypted based on the first operation key; and
send the encrypted combined patch file to the terminal device by using the communications unit 1101.

Optionally, when combining the decrypted plurality of intermediate patch files based on the version numbers corresponding to the plurality of intermediate patch files and the first code segment identifier included in the first code segment of each decrypted intermediate patch file, to obtain the combined patch file of the target application software, the processing unit 1102 is specifically configured to:
sort the plurality of decrypted intermediate patch files based on an order of stored version numbers corresponding to the plurality of intermediate patch files, to obtain a file sequence, where the decrypted intermediate patch file with the earliest version number is located at a first place of the file sequence, and the decrypted intermediate patch file with the latest version number is located at a last place of the file sequence;
sequentially combine all the decrypted intermediate patch files based on the first code segment identifier included in the first code segment in each decrypted intermediate patch file and an order of the file sequence, to obtain the combined patch file.

Optionally, the encrypted patch file further includes an encrypted patch header, and the encrypted patch header is encrypted by using the first security key; and the combined patch file further includes the encrypted patch header. Optionally, when determining the current version number of the target application software that is already installed on the terminal device and the target version number of the target application software that is to be upgraded by the terminal device, the processing unit 1102 is specifically configured to:
obtain, from the patch download request, a current version number of the target application software that is already installed on the terminal device, and a target version number of the target application software that is to be upgraded by the terminal device.

Optionally, the encrypted patch file includes at least one encrypted first code segment, the encrypted first code segment is a line of encrypted first code, and the first code segment identifier is a line number of the first code; and the combined patch file includes at least one updated first code segment.

In a second implementation, the processing unit 1102 is configured to:
store an encrypted patch file of target application software and a version number corresponding to the patch file, where the encrypted patch file includes a first code segment, and the first code segment includes an encrypted first code segment identifier and encrypted first code content, the encrypted first code segment identifier is obtained by encrypting a first code segment identifier by using a first operation key, the encrypted first code content is obtained by encrypting first code content by using a first security key, and the first operation key is different from the first security key;
receive a patch download request for the target application software from a terminal device by using the communications unit 1101;
determine, based on the patch download request, a current version number of the target application software that is already installed on the terminal device and a target version number of the target application software that is to be upgraded by the terminal device;
determine, based on the current version number and the target version number, an intermediate patch file from a locally stored encrypted patch file of the target application software, where the intermediate patch file is an encrypted patch file whose version number is greater than the current version number and less than or equal to the target version number,
when there are a plurality of intermediate patch files, decrypt each intermediate patch file based on a second operation key, where the decryption includes decrypting an encrypted first code segment identifier included in a first code segment of each intermediate patch file, to obtain a first code segment identifier included in the first code segment of each intermediate patch file;
combine the plurality of decrypted intermediate patch files based on version numbers corresponding to the plurality of intermediate patch files and a first code segment identifier included in the first code segment in each decrypted intermediate patch file, to obtain a combined patch file of the target application software, where the combined patch file includes an updated first code segment, and the updated first code segment includes the first code content that is encrypted by using the first security key and the updated first code segment identifier, where
encrypt the combined patch file based on the first operation key, where the updated first code segment identifier in the combined patch file is encrypted based on the first operation key; and
send the encrypted combined patch file to the terminal device by using the communications unit 1101.

Optionally, when combining the decrypted plurality of intermediate patch files based on the version numbers corresponding to the plurality of intermediate patch files and the first code segment identifier included in the first code segment of each decrypted intermediate patch file, to obtain the combined patch file of the target application software, the processing unit 1102 is specifically configured to:
sort the plurality of decrypted intermediate patch files based on an order of stored version numbers corresponding to the plurality of intermediate patch files, to obtain a file sequence, where the decrypted intermediate patch file with the earliest version number is located at a first place of the file sequence, and the decrypted intermediate patch file with the latest version number is located at a last place of the file sequence;
sequentially combine all the decrypted intermediate patch files based on the first code segment identifier included in the first code segment in each decrypted intermediate patch file and an order of the file sequence, to obtain the combined patch file.

Optionally, the encrypted patch file further includes an encrypted patch header, and the encrypted patch header is encrypted by using the first security key.

The combined patch file further includes the encrypted patch header.

Optionally, when determining the current version number of the target application software that is already installed on the terminal device and the target version number of the target application software that is to be upgraded by the terminal device, the processing unit 1102 is specifically configured to:
obtain, from the patch download request, a current version number of the target application software that is already installed on the terminal device, and a target version number of the target application software that is to be upgraded by the terminal device.

Optionally, the encrypted patch file includes at least one encrypted first code segment, the encrypted first code segment is a line of encrypted first code, and the first code segment identifier is a line number of the first code; and the combined patch file includes at least one updated first code segment.

The following describes specific functions of the processing unit 1102 when the communications apparatus 1100 is applied to a terminal device.

In a first implementation, the processing unit 1102 is configured to:
send a patch download request for target application software to the upgrade server by using the communications unit 1101;
receive, by using the communications unit 1101, an encrypted combined patch file of the target application software from the upgrade server, where the encrypted combined patch file is generated by the upgrade server by combining a plurality of intermediate patch files of the target application software, the encrypted combined patch file includes an encrypted first code segment, and the encrypted first code segment is obtained by encrypting a first code segment by using a first operation key, the first code segment includes a first code segment identifier and first code content that is encrypted by using a first security key, and the first operation key is different from the first security key;
decrypt the encrypted combined patch file, to obtain the combined patch file, where the encrypted first code segment is decrypted based on a second operation key, to obtain the first code segment; and first code content that is included in the first code segment and that is encrypted by using the first security key is decrypted based on a second security key, to obtain the first code content; and
upgrade the installed target application software based on the first code segment identifier and the first code content that are included in the first code segment in the combined patch file.

Optionally, the encrypted combined patch file further includes an encrypted patch header, and the encrypted patch header is encrypted by using the first security key; and when decrypting the encrypted combined patch file, the processing unit 1102 is further configured to:
decrypt the encrypted patch header of the encrypted combined patch file based on the second security key, to obtain the patch header.

Optionally, the processing unit 1102 is further configured to:
after decrypting the encrypted combined patch file and before upgrading the installed target application software based on the first code segment identifier and the first code content that are included in the first code segment in the combined patch file, obtain an identifier offset value of the target application software; and offset, based on the identifier offset value, the first code segment identifier included in the first code segment in the combined patch file. Optionally, the patch download request includes a current version number of the target application software that is already installed on the terminal device, and a target version number of the target application software that is to be upgraded by the terminal device.

Optionally, the encrypted combined patch file includes at least one encrypted first code segment, the encrypted first code segment is a line of encrypted first code, and the first code segment identifier is a line number of the first code. In a second implementation, the processing unit 1102 is configured to:
send a patch download request for target application software to the upgrade server by using the communications unit 1101;
receive, by using the communications unit 1101, an encrypted combined patch file of the target application software from the upgrade server, where the encrypted combined patch file is generated by the upgrade server by combining a plurality of target patch files of the target application software, the encrypted combined patch file includes a first code segment, the first code segment includes an encrypted first code segment identifier and encrypted first code content, the encrypted first code segment identifier is obtained by encrypting the first code segment by using a first operation key, the encrypted first code content is obtained by encrypting first code content by using a first security key, and the first operation key is different from the first security key;
decrypt the encrypted combined patch file to obtain a combined patch file, where the encrypted first code segment identifier is decrypted based on a second operation key, to obtain a first code segment identifier; and the encrypted first code content is decrypted based on a second security key, to obtain the first code content;
upgrade the installed target application software based on the first code segment identifier and the first code content that are included in the first code segment in the combined patch file.

Optionally, the encrypted combined patch file further includes an encrypted patch header, and the encrypted patch header is encrypted by using the first security key; and when decrypting the encrypted combined patch file, the processing unit 1102 is further configured to:
decrypt the encrypted patch header of the encrypted combined patch file based on the second security key, to obtain the patch header.

Optionally, the processing unit 1102 is further configured to:
after decrypting the encrypted combined patch file and before upgrading the installed target application software based on the first code segment identifier and the first code content that are included in the first code segment in the combined patch file, obtain an identifier offset value of the target application software; and offset, based on the identifier offset value, the first code segment identifier included in the first code segment in the combined patch file. Optionally, the patch download request includes a current version number of the target application software that is already installed on the terminal device, and a target version number of the target application software that is to be upgraded by the terminal device.

Optionally, the encrypted combined patch file includes at least one first code segment, the first code segment is a line of first code, and the first code segment identifier is a line number of the first code.

It should be noted that in the foregoing embodiments of this application, division into the modules is an example and is merely logical function division, and there may be another division manner during actual implementation. In addition, functional units in embodiments of this application may be integrated into one processing unit, or may exist alone physically, or two or more units may be integrated into one unit. The integrated unit may be implemented in a form of hardware, or may be implemented in a form of a software function unit.

When the integrated unit is implemented in the form of the software functional unit and sold or used as an independent product, the integrated unit may be stored in a computer-readable storage medium Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, a network device, or the like) or a processor (processor) to perform all or some of the steps of the method in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

Based on a same technical concept, this application further provides a communications device. The communications device may be applied to the software development device, the software server, or the terminal device in the software upgrade system shown in FIG. 1, can implement the software upgrade method provided in the foregoing embodiments and examples, and has a function of the communications apparatus shown in FIG. 11. Refer to FIG. 12. The communications device 1200 includes a communications module 1201, a processor 1202, and a memory 1203. The communications module 1201, the processor 1202, and the memory 1203 are connected to each other.

Optionally, the communications module 1201, the processor 1202, and the memory 1203 are connected to each other by using a bus 1204. The bus 1204 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used to represent the bus in FIG. 12, but this does not mean that there is only one bus or only one type of bus.

The communications module 1201 is configured to receive and send data, to implement communication interaction with another device. For example, when the communications device 1200 is applied to a software development device or a software server, the communications module 1201 may be implemented by using a physical interface. For another example, when the communications device 1200 is applied to a terminal device, the communications module 1201 may be alternatively implemented by using a transceiver.

The processor 1202 is configured to implement the software development device, the software server, or the terminal device to implement the software upgrade method provided in the foregoing embodiment. For a specific function, refer to the description in the foregoing software upgrade method and the specific function description of the communications apparatus 1100 in the embodiment shown in FIG. 11. Details are not described herein again.

The memory 1203 is configured to store program instructions, data, and the like. Specifically, the program instructions may include program code, where the program code includes computer operation instructions. The memory 1203 may include a random access memory (random access memory, RAM), or may include a non-volatile memory (non-volatile memory), for example, at least one magnetic disk memory. The processor 1202 executes the program instructions stored in the memory 1203, and implements the foregoing functions by using the data stored in the memory 1203, so as to implement the software upgrade methods provided in the foregoing embodiments.

It may be understood that the memory 1203 in FIG. 12 of this application may be a volatile memory or a non-volatile memory, or may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. Through example but not limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory in the system and the method described in this specification is intended to include, but not limited to, these memories and any memory of another proper type. Based on the foregoing embodiment, an embodiment of this application further provides a computer program When the computer program is run on a computer, the computer is enabled to perform the software upgrade method provided in the foregoing embodiment.

Based on the foregoing embodiment, an embodiment of this application further provides a computer-readable storage medium The computer-readable storage medium stores a computer program. When the computer program is executed by a computer, the computer is enabled to perform the software upgrade method provided in the foregoing embodiment. The storage medium may be any available medium accessible to a computer. The following provides an example but does not impose a limitation: The computer-readable medium may include a RAM, a ROM, an EEPROM, a CD-ROM or another compact disc storage, a magnetic disk storage medium or another magnetic storage device, or any other medium that can be used to carry or store expected program code in a form of instructions or a data structure and can be accessed by the computer.

Based on the foregoing embodiment, an embodiment of this application further provides a chip. The chip is configured to: read a computer program stored in a memory, and perform the software upgrade method provided in the foregoing embodiment.

Based on the foregoing embodiments, an embodiment of this application provides a chip system The chip system includes a processor, configured to support a computer apparatus in implementing functions related to the software development device, the software server, or the terminal device in the foregoing embodiments. In a possible design, the chip system further includes a memory, and the memory is configured to store a program and data that are necessary for the computer apparatus. The chip system may include a chip, or may include a chip and another discrete component. In conclusion, the embodiments of this application provide a software upgrade method and a device. After encrypting a patch file generated each time, a software development device sends an encrypted patch file and a corresponding version number to an upgrade server for storage. The upgrade server may determine, based on an upgrade requirement of a terminal device for target application software, a plurality of intermediate patch files from locally stored patch files of the target application software. Then, the upgrade server decrypts an encrypted first code segment identifier in each intermediate patch file, combines the plurality of intermediate patch files based on the version number and the first code segment identifier in each intermediate patch file to obtain a combined patch file, encrypts the combined patch file, and sends the encrypted combined patch file to the terminal device, so that the terminal device can perform software upgrade on the target application software based on the combined patch file.

In the foregoing solution, the upgrade server may combine the plurality of intermediate patch files that meet an upgrade requirement of the target application software of the terminal device. In this way, the terminal device may download and install the combined patch file only once, so that the target application software can be upgraded from the current version number to the target version number. It is clear that the method can shorten a time consumed by the terminal device to perform software upgrade, and can improve software upgrade efficiency of the terminal device. In addition, in a process of encrypting each patch file, the software development device uses different keys to separately encrypt the first code segment identifier and the first code content. In this way, in a process of combining patch files, the upgrade server may decrypt only the encrypted first code segment identifier, but cannot decrypt the encrypted first code content. Therefore, the method can ensure security of code content in the patch file.

A person skilled in the art should understand that the embodiments of this application may be provided as a method, a system, or a computer program product. Therefore, this application may use a form of a hardware-only embodiment, a software-only embodiment, or an embodiment with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. The computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

The computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A software upgrade method, comprising:
storing, by an upgrade server, an encrypted patch file of target application software and a version number corresponding to the patch file, wherein the encrypted patch file comprises an encrypted first code segment, the encrypted first code segment is obtained by encrypting, by using a first operation key, a first code segment identifier and first code content that is encrypted by using a first security key, and the first operation key is different from the first security key;
receiving, by the upgrade server, a patch download request for the target application software from a terminal device;
determining, by the upgrade server based on the patch download request, a current version number of the target application software that is already installed on the terminal device and a target version number of the target application software that is to be upgraded by the terminal device;
determining, by the upgrade server based on the current version number and the target version number, an intermediate patch file from the locally stored encrypted patch file of the target application software, wherein the intermediate patch file is an encrypted patch file whose version number is greater than the current version number and less than or equal to the target version number,
when there are a plurality of intermediate patch files, decrypting, by the upgrade server, each intermediate patch file based on a second operation key, wherein the decryption comprises decrypting an encrypted first code segment comprised in each intermediate patch file, to obtain a first code segment identifier of the first code segment of each intermediate patch file and the first code content that is encrypted by using the first security key;
combining, by the upgrade server, the plurality of decrypted intermediate patch files based on version numbers corresponding to the plurality of intermediate patch files and the first code segment identifier comprised in the first code segment in each decrypted intermediate patch file, to obtain a combined patch file of the target application software, wherein the combined patch file comprises an updated first code segment, and the updated first code segment comprises the first code content encrypted by using the first security key and an updated first code segment identifier;
encrypting, by the upgrade server, the combined patch file based on the first operation key, wherein the updated first code segment in the combined patch file is encrypted based on the first operation key; and
sending, by the upgrade server, the encrypted combined patch file to the terminal device.

2. The method according to claim 1, wherein the combining, by the upgrade server, the plurality of decrypted intermediate patch files based on version numbers corresponding to the plurality of intermediate patch files and the first code segment identifier comprised in the first code segment in each decrypted intermediate patch file, to obtain a combined patch file of the target application software comprises:
sorting, by the upgrade server, the plurality of decrypted intermediate patch files based on an order of the stored version numbers corresponding to the plurality of intermediate patch files, to obtain a file sequence, wherein a decrypted intermediate patch file with the earliest version number is located at a first place of the file sequence, and a decrypted intermediate patch file with the latest version number is located at a last place of the file sequence; and
sequentially combining, by the upgrade server based on the first code segment identifier comprised in the first code segment in each decrypted intermediate patch file and an order of the file sequence, all the decrypted intermediate patch files, to obtain the combined patch file.

3. The method according to claim 1 or 2, wherein the encrypted patch file further comprises an encrypted patch header, and the encrypted patch header is encrypted by using the first security key; and
the combined patch file further comprises the encrypted patch header.

4. The method according to any one of claims 1 to 3, wherein the determining, by the upgrade server based on the patch download request, a current version number of the target application software that is already installed on the terminal device and a target version number of the target application software that is to be upgraded by the terminal device comprises:
obtaining, by the upgrade server from the patch download request, the current version number of the target application software that is already installed on the terminal device and the target version number of the target application software that is to be upgraded by the terminal device.

5. The method according to any one of claims 1 to 4, wherein the encrypted patch file comprises at least one encrypted first code segment, the encrypted first code segment is a line of encrypted first code, and the first code segment identifier is a line number of the first code; and
the combined patch file comprises at least one updated first code segment.

6. A software upgrade method, comprising:
sending, by a terminal device, a patch download request for target application software to an upgrade server;
receiving, by the terminal device, an encrypted combined patch file of the target application software from the upgrade server, wherein the encrypted combined patch file is generated by the upgrade server by combining a plurality of intermediate patch files of the target application software, the encrypted combined patch file comprises an encrypted first code segment, the encrypted first code segment is obtained by encrypting a first code segment by using a first operation key, the first code segment comprises a first code segment identifier and first code content that is encrypted by using a first security key, and the first operation key is different from the first security key;
decrypting, by the terminal device, the encrypted combined patch file to obtain a combined patch file, wherein the terminal device decrypts the encrypted first code segment based on a second operation key to obtain the first code segment; and the terminal device decrypts, based on a second security key, the first code content that is comprised in the first code segment and that is encrypted by using the first security key, to obtain the first code content; and
upgrading, by the terminal device, the installed target application software based on the first code segment identifier and the first code content that are comprised in the first code segment in the combined patch file.

7. The method according to claim 6, wherein the encrypted combined patch file further comprises an encrypted patch header, and the encrypted patch header is encrypted by using the first security key; and
the decrypting, by the terminal device, the encrypted combined patch file further comprises:
decrypting, by the terminal device, the encrypted patch header of the encrypted combined patch file based on the second security key, to obtain a patch header.

8. The method according to claim 6 or 7, wherein after the decrypting, by the terminal device, the encrypted combined patch file, and before the upgrading, by the terminal device, the installed target application software based on the first code segment identifier and the first code content that are comprised in the first code segment in the combined patch file, the method further comprises:
obtaining, by the terminal device, an identifier offset value of the target application software; and
offsetting, by the terminal device based on the identifier offset value, the first code segment identifier comprised in the first code segment in the combined patch file.

9. The method according to any one of claims 6 to 8, wherein the patch download request comprises a current version number of the target application software that is already installed on the terminal device, and a target version number of the target application software that is to be upgraded by the terminal device.

10. The method according to any one of claims 6 to 9, wherein the encrypted combined patch file comprises at least one encrypted first code segment, the encrypted first code segment is a line of encrypted first code, and the first code segment identifier is a line number of the first code.

11. A software upgrade method, comprising:
storing, by an upgrade server, an encrypted patch file of target application software and a version number corresponding to the patch file, wherein the encrypted patch file comprises a first code segment, the first code segment comprises an encrypted first code segment identifier and encrypted first code content, the encrypted first code segment identifier is obtained by encrypting a first code segment identifier by using a first operation key, the encrypted first code content is obtained by encrypting first code content by using a first security key, and the first operation key is different from the first security key;
receiving, by the upgrade server, a patch download request for the target application software from a terminal device;
determining, by the upgrade server based on the patch download request, a current version number of the target application software that is already installed on the terminal device and a target version number of the target application software that is to be upgraded by the terminal device;
determining, by the upgrade server based on the current version number and the target version number, an intermediate patch file from the locally stored encrypted patch file of the target application software, wherein the intermediate patch file is an encrypted patch file whose version number is greater than the current version number and less than or equal to the target version number,
when there are a plurality of intermediate patch files, decrypting, by the upgrade server, each intermediate patch file based on a second operation key, wherein the decryption comprises decrypting an encrypted first code segment identifier comprised in a first code segment of each intermediate patch file, to obtain a first code segment identifier comprised in the first code segment of each intermediate patch file;
combining, by the upgrade server, the plurality of decrypted intermediate patch files based on version numbers corresponding to the plurality of intermediate patch files and the first code segment identifier comprised in the first code segment in each decrypted intermediate patch file, to obtain a combined patch file of the target application software, wherein the combined patch file comprises an updated first code segment, and the updated first code segment comprises the first code content encrypted by using the first security key and an updated first code segment identifier;
encrypting, by the upgrade server, the combined patch file based on the first operation key, wherein the updated first code segment identifier in the combined patch file is encrypted based on the first operation key; and
sending, by the upgrade server, the encrypted combined patch file to the terminal device.

12. The method according to claim 11, wherein the combining, by the upgrade server, the plurality of decrypted intermediate patch files based on version numbers corresponding to the plurality of intermediate patch files and the first code segment identifier comprised in the first code segment in each decrypted intermediate patch file, to obtain a combined patch file of the target application software comprises:
sorting, by the upgrade server, the plurality of decrypted intermediate patch files based on an order of the stored version numbers corresponding to the plurality of intermediate patch files, to obtain a file sequence, wherein a decrypted intermediate patch file with the earliest version number is located at a first place of the file sequence, and a decrypted intermediate patch file with the latest version number is located at a last place of the file sequence; and
sequentially combining, by the upgrade server based on the first code segment identifier comprised in the first code segment in each decrypted intermediate patch file and an order of the file sequence, all the decrypted intermediate patch files, to obtain the combined patch file.

13. The method according to claim 11 or 12, wherein the encrypted patch file further comprises an encrypted patch header, and the encrypted patch header is encrypted by using the first security key; and
the combined patch file further comprises the encrypted patch header.

14. The method according to any one of claims 11 to 13, wherein the determining, by the upgrade server based on the patch download request, a current version number of the target application software that is already installed on the terminal device and a target version number of the target application software that is to be upgraded by the terminal device comprises:
obtaining, by the upgrade server from the patch download request, the current version number of the target application software that is installed on the terminal device and the target version number of the target application software that is to be upgraded by the terminal device.

15. The method according to any one of claims 11 to 14, wherein the encrypted patch file comprises at least one encrypted first code segment, the encrypted first code segment is a line of encrypted first code, and the first code segment identifier is a line number of the first code; and
the combined patch file comprises at least one updated first code segment.

16. A software upgrade method, comprising:
sending, by a terminal device, a patch download request for target application software to an upgrade server;
receiving, by the terminal device, an encrypted combined patch file of the target application software from the upgrade server, wherein the encrypted combined patch file is generated by the upgrade server by combining a plurality of target patch files of the target application software, the encrypted combined patch file comprises a first code segment, the first code segment comprises an encrypted first code segment identifier and encrypted first code content, the encrypted first code segment identifier is obtained by encrypting the first code segment by using a first operation key, the encrypted first code content is obtained by encrypting first code content by using a first security key, and the first operation key is different from the first security key;
decrypting, by the terminal device, the encrypted combined patch file to obtain a combined patch file, wherein the terminal device decrypts the encrypted first code segment identifier based on a second operation key, to obtain a first code segment identifier; and the terminal device decrypts the encrypted first code content based on a second security key, to obtain the first code content; and
upgrading, by the terminal device, the installed target application software based on the first code segment identifier and the first code content that are comprised in the first code segment in the combined patch file.

17. The method according to claim 16, wherein the encrypted combined patch file further comprises an encrypted patch header, and the encrypted patch header is encrypted by using the first security key; and
the decrypting, by the terminal device, the encrypted combined patch file further comprises:
decrypting, by the terminal device, the encrypted patch header of the encrypted combined patch file based on the second security key, to obtain a patch header.

18. The method according to claim 16 or 17, wherein after the decrypting, by the terminal device, the encrypted combined patch file, and before the upgrading, by the terminal device, the installed target application software based on the first code segment identifier and the first code content that are comprised in the first code segment in the combined patch file, the method further comprises:
obtaining, by the terminal device, an identifier offset value of the target application software; and
offsetting, by the terminal device based on the identifier offset value, the first code segment identifier comprised in the first code segment in the combined patch file.

19. The method according to any one of claims 16 to 18, wherein the patch download request comprises a current version number of the target application software that is already installed on the terminal device, and a target version number of the target application software that is to be upgraded by the terminal device.

20. The method according to any one of claims 16 to 19, wherein the encrypted combined patch file comprises at least one first code segment, the first code segment is a line of first code, and the first code segment identifier is a line number of the first code.

21. An upgrade server, comprising:
a communications unit, configured to receive and send data; and
a processing unit, configured to implement the method according to any one of claims 1 to 5 by using the communications unit.

22. A terminal device, comprising:
a communications unit, configured to receive and send data; and
a processing unit, configured to implement the method according to any one of claims 6 to 10 by using the communications unit.

23. An upgrade server, comprising:
a communications unit, configured to receive and send data; and
a processing unit, configured to implement the method according to any one of claims 11 to 15 by using the communications unit.

24. A terminal device, comprising:
a communications unit, configured to receive and send data; and
a processing unit, configured to implement the method according to any one of claims 16 to 20 by using the communications unit.

25. A computer program, wherein when the computer program runs on a computer, the computer is enabled to perform the method according to any one of claims 1 to 20.

26. A computer-readable storage medium, wherein the computer-readable storage medium stores a computer program; and when the computer program is executed by a computer, the computer is enabled to perform the method according to any one of claims 1 to 20.

27. A chip, wherein the chip is configured to read a computer program stored in a memory, to perform the method according to any one of claims 1 to 20.
